**Europäisches Patentamt**

**European Patent Office**

**Office européen des brevets**

(11) Publication number: **0 132 069**

**A2**

# (12) EUROPEAN PATENT APPLICATION

(21) Application number: **84304405.8**

(22) Date of filing: **28.06.84**

(51) Int. Cl.⁴: **G 06 F 15/16**

(30) Priority: **29.06.83 US 509122**
**29.06.83 US 508769**

(43) Date of publication of application:
**23.01.85 Bulletin 85/4**

(84) Designated Contracting States:
**DE FR GB**

(71) Applicant: **WESTINGHOUSE ELECTRIC CORPORATION**
**Westinghouse Building Gateway Center**
**Pittsburgh Pennsylvania 15235(US)**

(72) Inventor: **Houser, Kirk Douglas**
**316 Tadmar Avenue**
**Pittsburgh Pennsylvania(US)**

(72) Inventor: **Staab, Carl Joseph**
**4310 Sardis Road**
**Murrysville Pennsylvania(US)**

(72) Inventor: **Edblad, Warren Albert**
**156 Deerfield Drive**
**Pittsburgh Pennsylvania(US)**

(72) Inventor: **Jones, Donald James**
**610 Glengary Drive**
**Pittsburgh Pennsylania(US)**

(72) Inventor: **Oravetz, David Michael**
**509 Kerwood Drive**
**Pittsburgh Pennsylvania(US)**

(74) Representative: **van Berlyn, Ronald Gilbert**
**23, Centre Heights**
**London, NW3 6JG(GB)**

(54) **Distributed process control system with means and method of automatic data base management of broadcast information.**

(57) A distributed process control system is shown in which a number of distributed processing units are connected by means of a cable. Portions of the system data base are transmitted repetitively while other data is only transmitted upon request. Each of the processors looks at all of the data messages transmitted over the highway and selects only those for storage which relate to its local operations. However, each message also contains a status word, a bit of which can be set to indicate that, for example, an alarm condition is in effect, so that each of the processors can be alerted to this whether or not they would ordinarily be interested in that specific data point. In this way, flexibility of communication of the system is maintained while each local processor is not required to have enough memory to store all the process variables involved.

Fig. 6

1
DISTRIBUTED PROCESS CONTROL SYSTEM WITH
MEANS AND METHOD OF AUTOMATIC DATA BASE
MANAGEMENT OF BROADCAST INFORMATION

This invention relates to a process control system for an industrial plant in which a single "data highway", a coaxial cable or the equivalent, connects a large number of distributed individual "drops" which are data receiving and transmitting locations. The drops all communicate with one another over the highway and may include operator terminals, data acquisition devices, or other process control equipment and the like. Each drop includes a first microprocessor for communication with the data highway and one or more additional processor performing the local system functions. The data highway is operated in a mixed mode system in which periods of time division multiplexed data transmission are interspersed with periods of "democratic" operation during which all of the drops have access to the data highway as required.

The art has, for many years, moved towards ever increasingly sophisticated control of plant operations. Numerous types of industrial processes are susceptible to automated control such as steel manufacturing, hydrocarbon and other chemical processing, power generation and the like. The increasing sophistication has led to a variety of new requirements for process control systems. Among these are included improved data handling capability, improved data acquisition capability, improved interactive control of the dynamic variables of any given process, and improved response time. It is also, of course, desirable to achieve these goals while at the same time keeping the system substantially reliable and foolproof, while relying as minimally as possible on human operator training. It would also be desirable that a system be provided that could be expandable so that the control system could "grow" with the plant being controlled, and furthermore that this growth be such as to not limit the nature of the control processes available. It would also be desirable that such a control system be provided which is adaptable to a wide variety of industrial operations without hardware modification, i.e., by simply reprogramming microcontroller means, or the like.

It is also desirable in provision of such a control system that means be provided for ready assembly of the system from a variety of modular prepackaged units, thus minimizing the individual design efforts for various industries.

In the prior art, various process control systems have used central or "host" computers interfaced to local data acquisition and control devices. It is desirable that this approach be avoided and that instead the intelligence formerly provided by the host computer be provided at the location of the various physical subcomponents of the system so that any one of these can malfunction without causing the entire system to cease operation.

There are several reasons why it would be desirable to eliminate a central computer from a process control system. Perhaps foremost among these is that use of a host computer requires that the system be predefined prior to its installation so that the precise arrangement of, for example, the communications between the host computer and the various processes controlled can be defined. It would clearly be desirable not only to provide a system which did not have to be so predefined but which was instead modular, and moreover, one which could grow later as further automated control of a particular process controlled becomes

0132069

desirable. Clearly, if this is to be possible, flexibility has to be provided to permit various types of messages to be transmitted between the various subsystems making up the system. For example, in a process control system, it might be desirable to substantially continuously monitor such variables as pressures and temperatures at critical points in the process. No matter what data communications channel is used, there is some finite amount of information which can be transmitted overtime. However, it cannot be determined in advance exactly how many process variables will need to be continuously monitored in any system particularly one which is intended to grow over time. Accordingly, it is desired that a communications scheme be provided for a distributed process control system in which some variables are communicated throughout the system repetitively, while provision also is made for occasional transmission of other data, not representing variables requiring continuous monitoring, for example, only when specifically called for by a processor. It is also desirable that non-periodically required functions such as operator interaction, downloading of programs to data acquisition and control drops and the like be performed without providing an additional communications path.

It should also be understood that while each drop of a distributed processing system may only use certain variables it is also desirable that means be provided whereby any drop in the system can be alerted as necessary to such things as out-of-limit alarm conditions and the like, whether or not the particular drop is ordinarily concerned with that process variable. This is very difficult to achieve in a centrally-controlled system, where messages must be channeled to specific addresses.

Another important attribute of a distributed process control system is that the communications be simplified, i.e., not require complex connections or multiple conductors. Preferably a single conductor would be used to connect all units in the system, and additional units could be added to an existing system without requiring any changes thereto.

Numerous designs of cable for interconnecting various portions of distributed data processing systems have been shown. Typical cables are flat multi-wire cables which carry a plurality of signals in parallel at once. Other types of signal wire connections have been used, such as coaxial cables in which a single shielded cable is used over which the bits are transmitted serially. The latter alternative is preferred for simplicity's sake and also because the shielding can be expected to provide a substantial measure of noise immunity to the system. However, the effective capacitance of such a cable causes square-wave shaped data bits which are transmitted to become "rounded" in transmission. Accordingly, it is desired that means be provided to reliably detect these "rounded" data transitions, so as to reduce error rates, preferably to such a very low level that no elaborate error checking equipment is required.

In typical prior art interconnected process control systems, a central or host computer has typically been used as discussed. One function performed by such a computer is provision of a synchronizing or clock signal. If the host is to be eliminated as above, system timing must nevertheless be accomplished. It would be desirable to do this without use of a separate timing signal wire and without special timing signal decoding and processing devices.

It is not unheard of in distributed data processing systems to provide redundant pathways for information to connect the various subunits of the system. Typically, one connection will have been designated primary and one secondary, whereby if a failure is detected over the primary path, the secondary path is activated. This has several drawbacks; one is that typically many of the events which cause the primary path to fail will also cause the secondary path to fail, so there is no insurance provided thereby. Second is the fact that the secondary path is not tested until the first path fails, by which time it may itself have failed. Messages can also be lost in the changeover period, depending on how this is organized. Clearly, it would be desirable if an improved way of providing redundant transmission paths could be provided.

It would also be desirable to perform communications over a single-wire cable while avoiding the use of repeaters or amplifiers, so as to eliminate the reliability and cost detriments these inevitably involve.

An object of the invention is to provide a way in which messages and the like can be transmitted.

The invention resides broadly in a distributed process control system having a plurality of processors at varying points in the system, and a data highway interconnecting said processors, each said processor has circuitry for obtaining data from respective system points and for transmitting said data as messages on said highway, each of said processors having circuitry to receive said messages and to analyze status words and to detect when a given condition exists.

The present invention achieves the objects of the invention and satisfies the needs of the art mentioned above. It provides a distributed process control system in which a single coaxial cable or optical fibre equivalent forming a data highway connects various drops which may comprise means for controlling a process, means for measuring a variable concerning a process or some parameter therein, means for providing an interface with human operators or with other computing systems, or the like. At each of the drops there are plural processors. Broadly, one processor communicates with the data highway, and the other(s) perform whatever control functions are locally required. They communicate through a shared, dual ported memory. The data highway is operated in mixed modes, in which it operates part of the time in a time division multiplexed (TDM) fashion, during which data relating to variables which require continuous monitoring can be output by each of the drops in succession onto the data highway where it can be accessed by any other drop. The remainder of the time the highway is operated in a so-called democratic mode during which any of the drops may output additional data or messages onto the data highway. In both modes, the messages are all transmitted indiscriminately over the bus; that is, all the drops have access to all the messages on the data highway. Each message comprises information concerning its content; the other drops typically analyze this information to determine whether they wish to copy that data into their own processor memories for analysis or other use. Each message put on the data highway by one of the drops also includes a "token" which indicates the identity of the next drop to have bus access.

According to one aspect of the present invention, and as mentioned above, a distributed process control system is operated in mixed-mode fashion. In a first mode, the cable connecting the drops is used on a time division multiplexed (TDM) basis. Every one hundred milliseconds, each of the drops is provided with a "slot" (or slots) in time during which it can put information onto the bus. Any of the other drops can then take the information as required. Clearly, it is essential that timing devices be provided so that the synchronization of the time division multiplexing portion of the operation, and of the overall function of the bus itself can be performed with high reliability. According to one aspect of the present invention, then, at least one of the drops is a "timekeeper" drop which in its slot of the time division multiplexed portion of the bus operations outputs a signal indicative of "system time" onto the data highway. Each of the drops, including the timekeeper, then copies this system time signal and uses it to synchronize its own operations and to perform its communications with the remainder of the system. In a particularly preferred embodiment of the invention, three such timekeeper drops are provided and the average of the two closest times, as sensed by the drops, is the value which they use for the system time. Accordingly, system time is treated as data with respect to its communication. Based on this fixed system time reference, time division multiplexing can be carried out without any additional clock signal wires or the like. In a sense the data transmissions themselves become self-clocking because time is treated as data.

By providing the system timing information over the same bus and in the same manner as ordinary data, control of the system is simplified because no additional interface means need be provided at the local controllers to receive the system timing data. Moreover, extra control wires are not required, nor is a separately configured timing unit. In this way, by treating the system timing information in the same manner as data, the timing function, which would otherwise be provided by a central computer or the like, is aggregated into the functions of the local drops. The three timekeeper drops also restart the bus should any errors concerning the sequence of operations on the bus occur.

During the TDM mode, the drops output predetermined data relative to process variables which require continuous monitoring; and during the democratic mode, any drop may inquire as to any other, non-repetitively transmitted data item. The entire system data base is thus globally available, i.e., every data item can be accessed and copied by any drop. This instantaneous transparent access to a distributed data base permits the distributed processing system of the invention to execute at any one drop control loop that uses process values generated elsewhere in the system. Furthermore, this transparent data base allows the distribution of functions which would ordinarily reside in a single, central computer into many independent drops. Since each drop operates in parallel and can concentrate on its assigned function without interruption, system performance never degrades regardless of what other events are occurring simultaneously. Functions such as CRT graphic display updates, which also use the data highway during the democratic mode, control loop processing, alarm reporting, historical data collection and printing of logs, all respond as fast during plant upsets as they do under steady state conditions.

In a preferred embodiment each drop has access to the highway at least once every hundred milliseconds allowing it to broadcast process values stored in its memory, in addition to the message unit identifiers. In turn, each of the drops listens to broadcasts made by other drops about process points which may be of interest to itself and pulls them off the highway where desired to store them in its memory. All process variables are broadcast at least once per second, but since each drop has access to the highway every one hundred milliseconds a drop can broadcast and update key process variables as frequently as every 100 ms if conditions warrant. In a preferred embodiment the two megabaud speed of the highway guarantees a system broadcast rate of at least 10,000 points per second. The broadcast technique used according to the invention eliminates both the need for a master or traffic director, as well as the high overhead associated with send and acknowledge messages as frequently used in the prior art. Instead, each drop is master for a moment and uses a token passing technique to give the next drop in the sequence access to the highway. Finally, at the conclusion of each broadcast cycle, the remainder of each hundred millisecond cycle is available on a demand basis for other communications such as downloading of programs, transfer of English language description of points, etc.

Biphase coding is used for the data on the data highway, and in the preferred embodiment a phase-locked-loop circuit in each drop is used to divide the biphase pulses received into smaller subunits which are then analyzed in a weighted fashion to ensure correct detection of the pulses on the data highway.

According to one aspect of the present invention, several of the communications interface devices which make up the connection of each local drop to the data highway are provided in a redundant fashion, as is the data highway. Both of the communications interfaces look for messages on the highway and transmit a "good message received" signal to the associated communications processor when analysis of the error correction code built into each message indicates that the message has been correctly received. The processor then takes the message from the communications device which first provides the "good message received" signal. In this way, both communications devices and data highways are constantly on-line and redundancy is provided without need of a switchover between master and slave communications devices or the like.

The invention will be better understood by reference to the accompanying drawings, in which:

Fig. 1 shows an idealized perspective, cut-away view of a plant employing the distributed processing system according to the invention;

Fig. 2 shows a similar view of the processing system according to the invention in more detail;

Fig. 3 shows building blocks used in manufacture of the system of the invention;

Fig. 4 shows a schematic view of the components making up a typical drop;

Fig. 5 shows a more detailed view of a typical drop showing use of redundant additional highway components;

Fig. 6 shows the physical layout of a typical drop;

Fig. 7, comprising Figs. 7a, 7b and 7c shows representative views of typical data highway transmission blocks and messages;

Fig. 8, comprising Figs. 8a through 8d, gives a further breakdown of the data messages transmitted;

Fig. 9 comprises a series of curves which illustrate various methods of data encoding;

Fig. 10 comprises another series of curves which illustrate data encoding techniques and the message protocols utilized according to the invention;

Fig. 11 shows a circuit for the biphase coding scheme adopted according to the invention;

Fig. 12 shows the digital phase-locked loop circuit which is used to ensure that the biphase encoded data is correctly decoded;

Fig. 13 comprising Figs. 13(a) through (e) illustrates the biphase data weighting scheme employed;

Fig. 14 shows a diagram of the timekeeping logic used to ensure that the various drops stay properly synchronized to one another;

Fig. 15 shows a block diagram of the data highway processor (MBD);

Fig. 16 shows a block diagram of the microprocessor used in the data highway processor (MBD);

Fig. 17 shows a block diagram of the accompanying microsequencer unit used in the data highway processor (MBD);

Fig. 18 shows a block diagram of the data highway communications circuit (MBC);

Fig. 19 shows a block diagram of the microengine found on the data highway communications (MBC) card;

Fig. 20 shows a block diagram of the dual port shared memory used for communication between the functional processor and data highway processor units;

Fig. 21 shows an overview flowchart of the MBD operation sequence;

Fig. 22 expands on a block shown in Fig. 21, relating to preparation of a TDM message;

Fig. 23 also expands upon a block of Fig. 21 and shows how the democratic messages are prepared;

Fig. 24 similarly details a block of Fig. 21 and shows how messages received are decoded;

Fig. 25 shows the sequence of the timekeeper transmissions, during which the system clocks are all updated;

Fig. 26, comprising Figs. 26a and 26b, shows in Fig. 26a the sequence of transmission of several messages per 100 millisecond interval by a given drop, and how the messages actually transmitted can vary, while Fig. 26b gives an example of a bus allocation list;

Fig. 27 shows how the control field changes during the time division multiplexed and democratic modes;

Fig. 28 is a flowchart showing how the status word alarm bit is utilized; and

Fig. 29 shows how the shared memory is arranged.

Table of Contents

| | | | |
|---|---|---|---|
| 1. | System Outline | | 12 |
| 2. | Communications Format | | 16 |
| 3. | Drop Overview | | 20 |
| 4. | Message Format | | 23 |
| 5. | Data Encoding and Decoding | | 29 |
| 6. | Timekeeping - Generally | | 35 |
| 7. | The Data Highway Controller | | 39 |
| | A. | The Data Highway Processor (MBD) | 39 |
| | B. | The Data Highway Communications Card (MBC) | 45 |
| | C. | The Shared Memory (MBS) | 50 |
| 8. | Data Highway Processor Operations | | 53 |
| | A. | Generation of TDM Mode Messages | 56 |
| | B. | Generation of Democratic Mode Messages | 57 |
| | C. | Digesting of Received Messages | 57 |
| 9. | Timekeeping - Specifics | | 60 |
| 10. | Bus Allocation | | 61 |
| 11. | The Control Field | | 63 |
| 12. | Alarm Handling | | 64 |
| 13. | Organization of Shared Memory | | 66 |

1.  System Outline

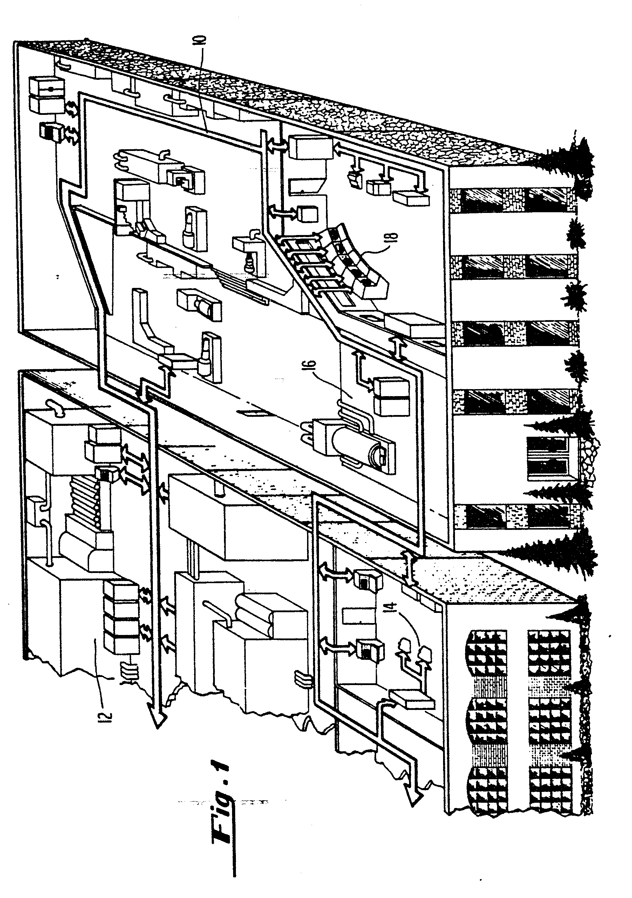

As discussed above, a primary object of the invention is to provide a distributed process control system in which a single data highway connects all the various input/output terminals, data acquisition stations, control devices, record keeping devices, error and alarm indicators, and means for communication with other data processing systems. Fig. 1 shows an overview of the system of this kind according to the invention. A single data highway 10 connects a wide variety of input/output devices such as process control devices 12, input/output terminals 14, sensors 16, control display devices 18 and the like. According to the invention and as will be further detailed below, the various inputs and outputs to the data highway

13      0132069

10 are termed "drops"; all interact with the data highway in substantially an identical way, although, of course, not all of them utilize the same properties of the data highway. This allows the system to be considered modular because any number of any type of drops may be added to the system. In a preferred embodiment up to 254 different drops can be used. They all have access to the entire data base of the system, which is copied or stored in the respective memories of each drop, and all can communicate with one another where required. This is done to ensure maximum flexibility and also to avoid use of a single central computer. As discussed above, this is desirable for a variety of reasons, one of which is that the system can keep operating even if one or more of the drops is disabled, whereas if a central computer were disabled, the entire system would effectively be shut down. The fact that the drops all communicate with each other allows different portions of the system to provide inputs and outputs to various control loops and the like. The mixed-mode operation of the highway discussed below, allows such traditional central computer functions as program download, status report generation and the like to be performed by drops configured as operator terminals, and without interruption of the system functions. Complete "data transparency" is achieved, that is, each processor can "see into" the memories of the other drops, eliminating the requirement of central memory, and providing very fast cathode ray tube displays which may be customized according to the operator's desires, allowing flexibility in the choice of programming languages.

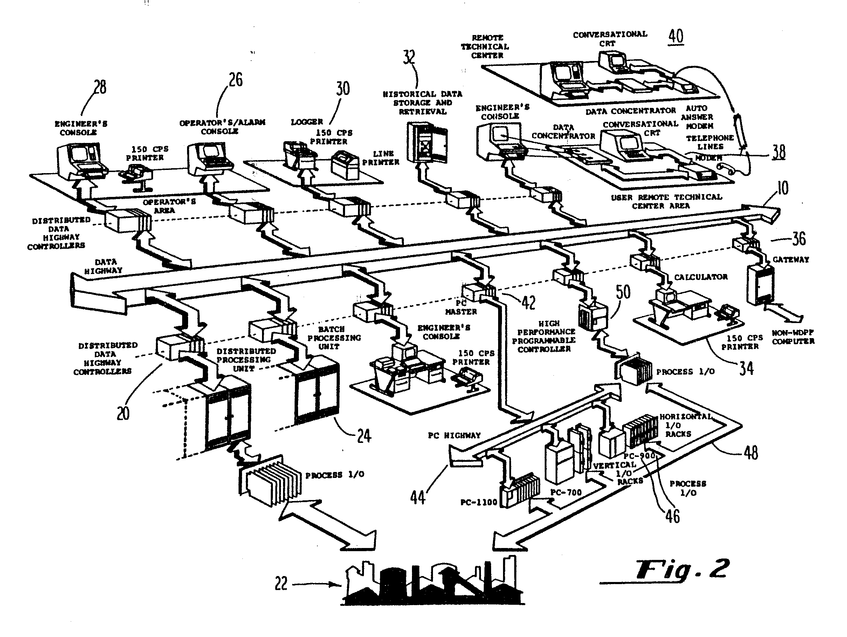

Fig. 2 shows a more detailed view of a portion of a distributed processing system according to the invention. A data highway 10 connects a plurality of drops which are arranged to perform varying functions. Each drop comprises a processor for performing such functions; as used herein the term processor refers to the hardware and software at the drop location, which is connected by suitable means to the highway. Processors may include, for example, a distributed processing unit 20 which performs data acquisition and control functions and interfaces to the various industrial processes in the plant under control, indicated generally at 22. A batch processing unit 24 may also be used. The operator's alarm console 26 provides a cathode ray tube based control display and alarm console for a human operator. An engineer's console 28 can be used to provide functions provided by the operator's alarm console and also for programming of the system as desired. A data logger 30 may also be provided to record information generated during a production run. Historical storage and retrieval at 32 can be used to archive this data. One of the drops may also include a calculator function at 34 to provide special calculations required to optimize the plant operations, for example. One drop may be a "gateway" 36, providing interface to some other computer, and another interface unit may be provided at 38 for interface via a telephone line to a remote location as indicated at 40. A programmable controller master 42 is also shown as one of the drops. This provides the interface to a programmable controller highway 44 which is another bus to which a number of varying types of programmable controllers 46 may be connected. These, in turn, may connect by way of a process input/output bus 48 to other programmable controller devices as at 50. In this way, a large number of differing controllers of varying types can all be interfaced to one drop to save access spots on the data highway 10, and to allow complete flexibility in drop design; each drop may be configured to suit its purpose, not merely to suit the overall system design.

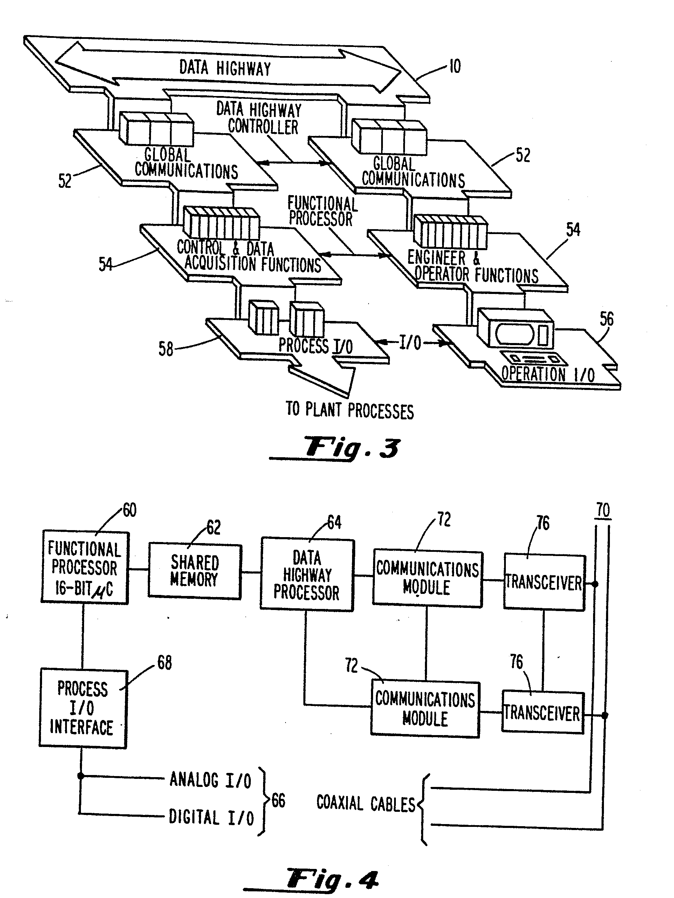

Fig. 3 shows in further detail the three sets of hardware which comprise the "building blocks" of the system according to the invention. To the data highway 10 are connected data highway controller (DHC) subsystems at 52. These are common to all drops and consist of a shared memory, a modulator/demodulator (Modem) for serial-to- parallel and parallel-to-serial data conversions and a data base highway processor which, in the preferred embodiment is a custom bit-slice microprocessor. The shared memory is dual ported and forms the interface between the data highway processor and the functional processor 54 (discussed below). The functional processor performs the specific tasks associated with the particular drop. The functional processor comprises a commercially available microprocessor, having one or more chips. As used herein, the term microprocessor may refer to a single chip or interconnected chips, as well as associated memory, and thus embraces microprocessor systems as known in the art.

The functional processor 54 has transparent communication through the DHC to the remainder of the distributed processing system according to the invention. All data transferred to and from shared memory appears to the functional processor as part of its internal data base, independent of origin. In the preferred embodiment, where data is supplied over the data highway to other drops, the data highway controller looks at each data message and compares it to a stored table to determine whether its associated functional processor will have use for this data. If so, the message is stored, or copied, into the drop's shared memory. The functional processor, therefore, is freed from such communications tasks and can concentrate on its own control tasks, using as memory the memory it shares with the data highway processor. The use of two processors with a shared memory greatly simplifies the data highway interface while providing additional local processing capability for the functional processor.

The functional processors 54 perform the specific functions associated with the drop, which may include such things as man/machine interface by means of an operator input/output terminal 56, as well as all forms of data acquisition and control processing, by means of process input/output devices 58. The functional processor obtains and stores data from the shared memory, and its communication with other hardware as required, including mass memory process input/output and peripherals, is carried out by way of the data highway processor, thus freeing the functional processor from communications tasks.

The input/output interface 58 provides communication to the various processes in the plant controlled. According to this arrangement a wide variety of input/output devices are available, such as the operator console displays at 56, as well as all forms of process controller devices.

2. Communications Format

The communications format used according to the invention will now be described briefly in order to enable understanding of subsequent subject matter. Communication over the data highway bus is controlled by means of the data highway controllers at each drop. Communication is performed both by periodic broadcasts of process data and in response to requests made by any one of the drops. In the preferred embodiment, the system operates according to a mixed mode communications arrangement comprising repetitive and non-repetitive transmission modes. In a first repetitive portion of each hundred millisecond communications cycle, the system is operated according to a time division multiplexing (TDM) scheme during which each drop has at least one "slot" in time into which it injects a message onto the data highway. All the other drops can select data from the messages as desired. In the latter or non-repetitive half of each 100 ms interval, the "democratic" mode, the highway is available for other messages, such as requests for specific data from other drops and the like. Specifically, every 100 milliseconds, each drop (of which up to 254 may be provided in the preferred embodiment) has access to the highway allowing it to broadcast process values stored in its shared memory along with appropriate message identifiers and status information. Each non-broadcasting drop listens to broadcasts made by

0132069

other drops, selects points of interest to it and pulls them off the highway to store them in its shared memory.

At the conclusion of each periodic broadcast cycle, the remaining time in each 100 millisecond time slice is available on a demand basis for other communications such as downloading of programs, transfer of English description of points, etc. The drops also send and respond to specific data requests from other drops where required.

In practice, all the process variables are broadcast at least once per second, but since each drop has access to the highway every 100 milliseconds, a drop can broadcast and update data concerning key process points as frequently as every 100 milliseconds if conditions warrant. The data highway has a transfer rate of two megabaud which provides a system broadcast rate of at least 10,000 process points per second. The broadcast technique used in the practice of this invention eliminates both the need for a master or traffic director and the high overhead associated with conventional send/acknowledge schemes in which an acknowledgement is passed back to the originating point in the system. According to the present system, the drops are not provided with acknowledgement that their messages have been received. Instead, the information is simply put on the highway to be taken by other drops as they require. Each drop is master of the highway for a moment and in its transmission includes a token, used to indicate the next drop to have highway access.

When the data base for a drop is created, data base information such as English descriptions of data points, alarm limits, etc., are defined and stored in the memory of the same drop where the process value is obtained or calculated. The system data base is thus distributed in many drops, as is the processing system; however the mixed mode broadcast means of communication allows any drop on the highway access to any process data residing anywhere in the system, as if it were part of its local data base. The

0132069

data highway in essence thus acts as a distributed global data base available to any drop on the system, and the speed and architecture of the communications system ensures that this global data base is always current, never' more than one second old.

This transparent access of each drop to the distributed global base means that control loops can run in one drop using process values generated or calculated by other drops. In addition, transparent access to the global data base permits functions which would normally be constrained to run in one processor to be distributed anywhere on the highway, a feature which is greatly convenient in systems of large physical extent or complexity and also permits additional drops to be added to an existing system if increase in system performance is required without modification of the existing system or degradation of its performance. For example, more calculators, more historical storage, and more data acquisition drops can be added. Drops can be added without affecting the operation of the pre-existing drops, if desired, since each functional processor can be programmed to accept or ignore the broadcasts from the additional drops. In a like manner, drops can be removed without perturbing operation of the remaining drops.

Certain key functions of any processing system such as overall plant optimization, historical storage and retrieval and plant-wide logging require access to the entire data base. Traditionally, such functions have been performed through the use of a central host computer which periodically obtains plant data from the highway and then creates a data base within itself for use by these system-wide programs. The major deficiency of this approach has been the data bottleneck created at this one point and the potential saturation of the host computer since it has to provide many functions simultaneously. For example, traditional operator terminals have required access to the entire system data base, and have accordingly been configured as peripherals attached to host computers, which have access to a main memory in which is stored the entire data base. According to the present invention, the ability of any drop to access the total global data base transparently allows functions which would previously have required a host computer to be distributed among many drops and permits the host function to be carried out, in effect, by a distributed computer system. One drop can be arranged to provide historical storage and retrieval, another can be a calculator to provide plant optimization, and a third a logger drop to provide other functions which would previously have required a host computer. Higher system availability and elimination of performance degradation associated with host computers are obvious benefits. On the other hand, if for heirarchical or other interface considerations, a host computer should be required, one can easily be accommodated via a "gate-way" drop. Finally, the transparency of communications provided according to the invention allows additional drops to be connected to the system with ease.

In the preferred embodiment up to 254 drops can be connected to the coaxial cable forming the data highway, which can be up to 6km in length without repeaters. In another envisioned embodiment, a fiber optic highway is used which has the capability of supporting up to 64 drops. As is well understood in the art, fiber optic cables have substantially better noise immunity than ordinary coaxial cables and this may be of significance in certain plant applications. While present system capacities are set by practical noise and time delay factors, the system and method of this invention are limited only by state-of-the-art engineering constraints. Further, by integrating data acquisition and local control functions in a single drop, duplication of sensors so often needed by systems which perform only one or the other function is avoided. The dual drop functions also permit easy integration of systems, for example, which start with data acquisition only and add control later. Moreover, this arrangement permits an integrated approach to process modulation and sequential control as well as to data acquisition.

3. Drop Overview

Referring now to Fig. 4, the system according to the invention uses a first functional processor 60 at the drop level for such functions as process monitoring, process control and operator interface, while a second data highway processor 64 is used to obtain data from the highway as required by the functional processor and make its communications to the highway. In this way, the functional processor is free to concentrate on its data acquisition and control tasks and is relieved from the complex requirements of communications interface. The functional processor 60 is connected by means of a shared memory 62 to the data highway processor 64. Use of this shared memory 62 is very desirable in that it automatically provides the interface between the two processors without requirement of simultaneous transfer of data directly from one processor to the other. Instead, one or the other processor simply accesses the shared memory 62 as required. The functional processor 60 then is connected to various conventional input/output units 66 by a process input/output unit 68. As will be discussed in further detail below, the functional processor is connected to a conventional industry standard bus so that any form of presently available input/output equipment which is adapted to be connected to that bus can be used. In this way, the user of a system according to the invention is not constrained to use of any one manufacturer's process input/output units but can connect substantially any device desired.

The data highway processor 64 makes connection to the data highway 70 (corresponding to the highway 10 of Figs. 1-3) which is shown duplicated for redundancy. The dual highways thus constitute physically separate transmission lines, or paths. As used herein, the term highway means a coaxial cable, optical fibre cable, or equivalent. Further redundancy is provided by means of duplicated communication modules 72 and transceivers 76. These will be discussed in detail below. In particular the transceivers 76 form the subject matter of copending application Serial No. _____, filed _____ (Attorney's Docket No. WE-51279) incorporated herein by reference. The data highway processor 64, the communications module 72, and the shared memory 62 correspond to the data highway controller 52 of Fig. 3.

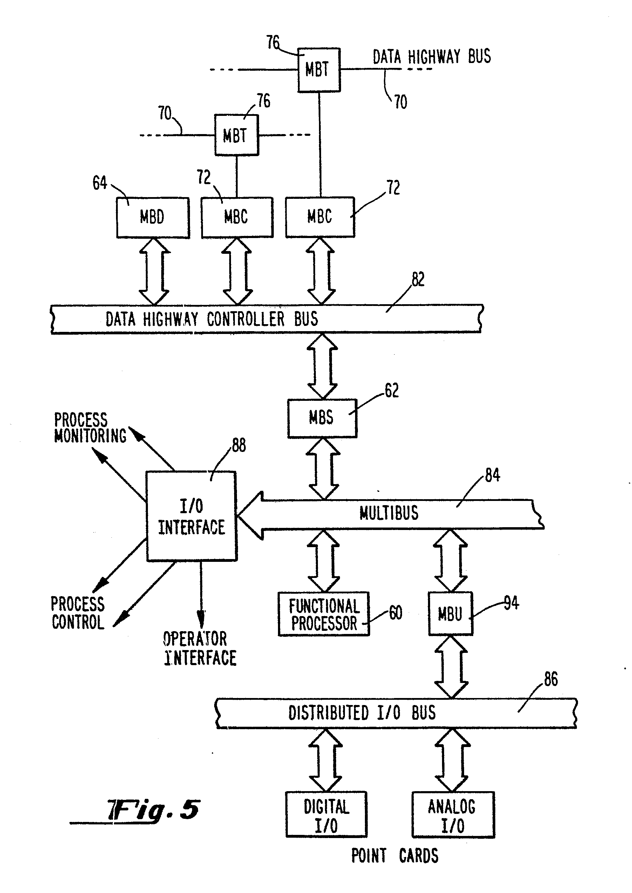

Fig. 5 shows schematically further details how a data highway drop is arranged, and shows redundancy of certain components which in some environments may be desirable. The data highways 70 as shown are redundant. They are connected by means of transceivers (MBT) 76 to data highway communications controllers (MBC) 72 which are connected to a data highway controller (DHC) bus 82. The data highway communications cards (MBC) 72 are thus provided in redundant fashion. To the data highway controller bus 82 is connected the data highway processor (MBD) 64 which as discussed above performs the functions of communications between the functional processor 60 and the data highway 70. The data highway controller bus 82 makes its connection to the functional processor via the shared memory (MBS) 62 which is connected to the functional processor 60 by way of a second bus 84. In the preferred embodiment this second bus 84 conforms to the industry standard "Multibus" (trademark Intel Corporation). This industry-standard bus (defined in IEEE Standard No. 796) was adopted so that a user's choice of functional processor would not be limited to goods available from any one manufacturer, and so that users could select from the very wide variety of peripheral devices now available which interface to the industry standard Multibus data communications interface. This provides a great deal of flexibility in designing of drops. Effectively, the drop can be designed in accordance with the user's needs and system devices. At the present time there are literally thousands of peripherals available which are amenable to the Multibus interface, and the possible permutations of the system according to the invention are thus practically endless. A particularly versatile functional processor unit is available from Intel Corp. under Model No. SBC 86/05; this unit is a 16-bit microcomputer and can readily be programmed by one skilled in the art to perform a wide variety of useful functions, including man/machine interface, which includes video display generation, as well as process interface and control. See Intel Manual Order No. 143153-001.

An interface unit (MBU) 94 may be used to interface the Multibus 84 to a third bus 86, referred to as a distributed input/output bus. Connection can be made from bus 86 to input/output devices which may have different interface specifications. The functional processor 60 is also connected by way of Multibus 84 to input/output devices 88, as required for the various functions indicated, including process monitoring, process control and operator interface. Other drop functions are possible such as archival storage and the like.

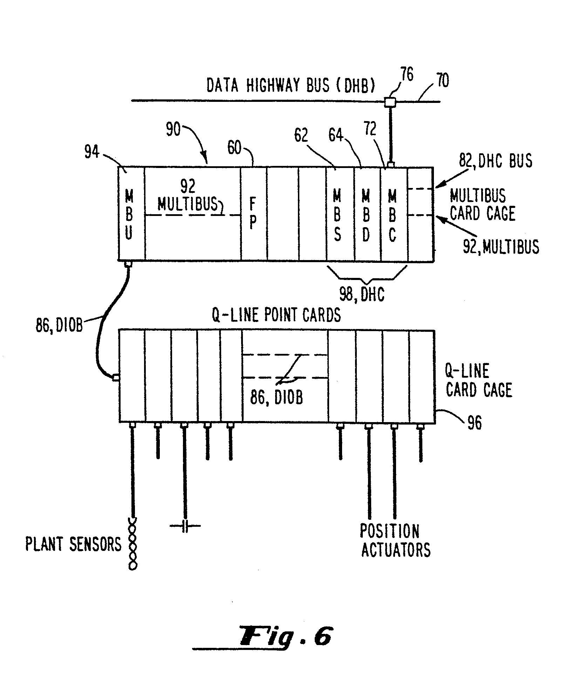

Fig. 6 shows the physical location in a drop of the components discussed above with respect to Fig. 5. The data highway 70 is connected to the transceiver 76, and a cable runs from it to the data highway communications (MBC) card 72 which is inserted in a Multibus card cage indicated generally at 90. The transceiver 76 may alternatively be carried in cage 90 where it is convenient to juxtapose this closely to the highway 70. Also carried in this cage and plugged into the Multibus are the components which are Multibus compatible, such as the shared memory system (MBS) 62 and the functional processor 60. The Multibus connectors are shown as dotted lines 92 running across the back of the card cage. Thus, simply by inserting the cards into the cage, connection is automatically made to the Multibus. The data highway controller (DHC) bus 82 is also shown as a

0132069

dotted line connecting the data highway processor 64, the shared memory (MBS) 62 and the data highway communications card MBC 72.

The Multibus 92 is connected to the functional processors indicated at 60 and also to the MBU unit 94 which provides connection by way of a distributed input/output bus 86 to a second card cage referred to as the Q-line card cage 96. Cage 96 may contain, for example, other input/output devices, for example, those available from the Westinghouse Electric Company, assignee of the present invention, and sold under the tradename "Q-line point cards". These then make actual connection to plant sensors, position actuators and the like, as indicated on the drawing of Fig. 6. Accordingly, if the drop is to function in accordance with a peripheral which is directly Multibus compatible such as an operator terminal or the like, it is simply connected to the Multibus 92. On the other hand, if specialized process control is desired, an MBU unit 94 can be used to interface the Multibus to the distributed input/output bus 86 and the plant sensors can then be attached to the Q-line card cage 96 (or any other desired bus system) as indicated in Fig. 6. In Fig. 6 it will be observed that the MBC 72, which is the data highway communications (Modem) card, the MBD 64 which is the data highway processor card, and the MBS 62 which is the shared memory card, are all referred to as making up the DHC or data highway controller 98. The MBT or transceiver can also be mounted here. These four cards then comprise the means making the interface between the functional processor 60 and the data highway bus 70.

Details of the components of the data highway controller (DHC) 98 will be discussed after explication of the message format used on the data highway.

4. Message Format

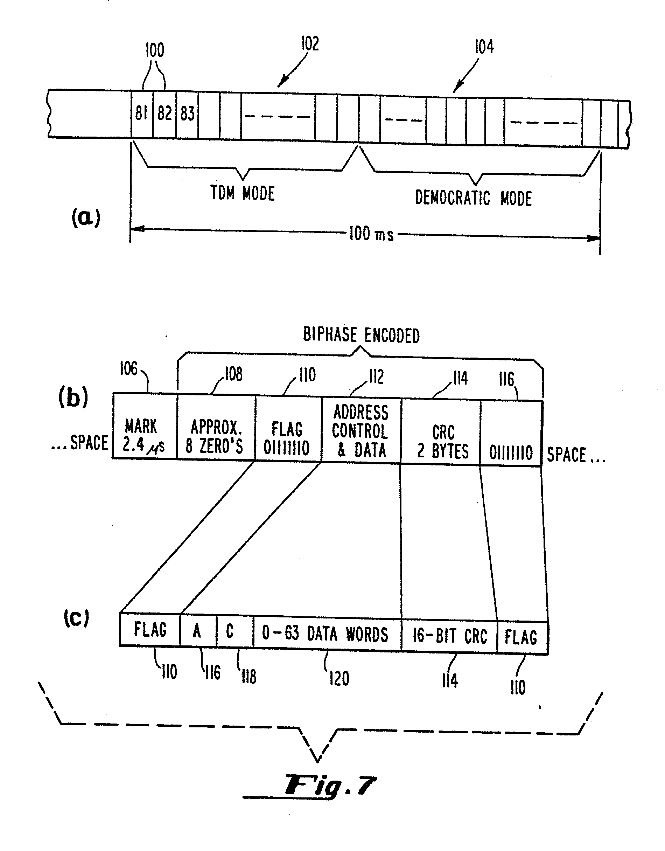

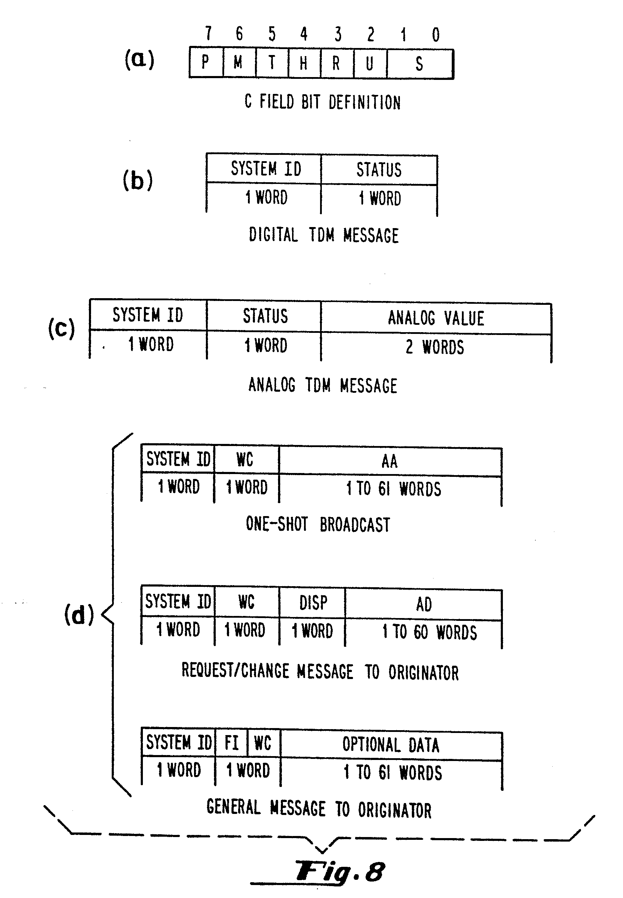

The message scheme used according to the invention is shown generally by Figs. 7 and 8. Fig. 7a shows the overall outline of the mixed mode transmission system of the invention. As discussed above, communications is performed in intervals of 100 milliseconds. The first portion of each 100 millisecond slice of time is the TDM mode illustrated at 102 in which time is divided into slices for multiplexing purposes. Each of the drops is assigned at least one slice of time as indicated at 100; that is, for example, drop 81 transmits during a first slice 100, drop 82 during the next slice, drop 83 during the subsequent one, and so on. However, the drops need not transmit in numerical order. At the end of the TDM mode 102, the democratic mode 104 is entered. During this time period specialized messages, such as requests for additional data, downloading of programs, system maintenance and the like can be performed. If a drop has no democratic message to transmit, it simply transmits an empty message, "handing-off" the bus to the next drop.

The mixed mode system has several advantages. By using time division multiplexing, all the drops have access to the bus at specified times. This permits frequent updating of predetermined data throughout the entire system. The TDM scheme allows maximum use of the time available for data highway communications. On the other hand, also providing the democratic mode gives substantial flexibility to the system, i.e., allows functions to be performed which would not all have been available if the data transmission were solely TDM.

Fig. 7b shows a single data block or "frame" as transmitted by a drop onto the data highway. The same format is used in both TDM and democratic modes, though the individual fields can vary. The protocol used is a modification of a traditional "HDLC" frame, an industry-wide standard basically propounded by IBM Corporation. Its basic make-up is shown in Fig. 7b. Spaces are provided between successive frames, followed by a mark pulse 106 approximately 2.4 microseconds long, used to turn on the data transmitter. There then follows a series of eight biphase encoded zeroes 108 which provide synchronization for the data highway communication card's phase-locked loop circuit which is used, as will be discussed below, to decode the biphase data subsequently transmitted. There next follows a flag byte 110 consisting of a zero, six ones and another zero. This series of binary values is unique in the HDLC protocol so that it can be used as a flag. This is explained as follows: The HDLC protocol uses a technique called zero insertion to ensure that a flag does not inadvertently occur on the data highway bus. According to the zero insertion technique, an extra zero is inserted into the outgoing data stream whenever the data which would otherwise be transmitted has five ones in succession. Any such extra zeroes, along with the cyclic redundancy character discussed below, is stripped out of the serial input stream by the receiving HDLC controller before the data is output to the data highway processor. Thus, the HDLC controller, which is conventional, controls the output onto the data highway so that the flags occur only at the beginning and ending of the transmission block. The flag 110 is then followed by address, control and data fields 112, discussed below in connection with Fig. 7c. Next follows a cyclic redundancy check field 114, 2 bytes long, which is generated in the data highway controller and inserted into the outgoing transmission for error control and correction purposes in accordance with the conventional teachings of the art. A second flag 110 concludes the transmission.

Fig. 7c expands the description given of the data blocks or "frames" transmitted by each drop in Fig. 7b. The flag byte 110 is as discussed above. Then follows the address field 116. This address field or "A-byte" 116 is used in this system to provide a "token" according to which the next drop to have access to the data highway is specified. The A byte 116 is an 8-bit address index which is incremented whenever a drop sends out a message. This index is used to access a table of drops, which provides an indication of which drop next has access to the highway.

Following the address byte 116 is the control byte 118. This is a set of eight bits which are control flags. They are discussed below in detail in connection with Fig. 8a. Then follow between 0 and 63 data words at 120 which are also discussed below in connection with Fig. 8b and c. A typical point or subportion of the message frame of Fig. 7c relating to a particular process value being monitored, includes one word which is a "system identification" tag which identifies a particular data point and is used by the data highway controllers to determine if the particular data message is of interest to the associated functional processor; each point also includes a status word. Additional words can be used to transmit, e.g., analog values. After all words have been transmitted the 16-bit cyclic redundancy check 114 and the flag 110 are transmitted, which concludes the frame transmitted by any one drop according to the invention.

Fig. 8, comprising Figures 8a through 8d, shows the detailed format of portions of the frame discussed above. Fig. 8a defines the bits used in the C field 118. As mentioned above it comprises eight bits. Bit P, in the seventh position, is the parity bit for the combined A and C fields. Parity is defined to be odd. This bit catches bit errors that might occur in transmission between the processor and the HDLC controller. The M bit, position 6, indicates the message mode. If set, the mode is TDM; that is, the same message format is used in the TDM and democratic modes and the M bit is to indicate to which mode a particular message belongs. The T bit, position 5, indicates the mode of the message that will follow. If set, the mode is TDM. In other words, this bit indicates the mode to which the current drop hands off. The H bit, position 4, is set by the DHC to signify that this frame is a recovery hand-off resulting because the previous hand-off went unanswered. The R bit is used by the timekeepers which are responsible for synchronizing transmission of the frames over the data highway. When set, the R bit indicates that a timekeeper DHC has detected an abnormally long period of inactivity in the data highway and is restarting the data highway with this frame. Accordingly, the R bit would be set when a timekeeper has determined that an error of some kind in the token passing scheme had occurred. The U bit, position 2, is set in the last democratic mode frame to indicate that the next frame will be TDM, when the 100 millisecond period is over. In this case, the A field will be saved for use when the democratic period is resumed. When the U-bit is set, there is thus an implied hand-off to the first entry in the TDM list. Finally, the two S bits, positions 1 and 0, are used by the timekeepers as well. When they are non-zero this signifies that the word following the C field contains a clock value. The value of the S bits indicates which of the three timekeepers used in the system (for reasons of redundancy) is sending the message. Value 01 implies timekeeper A, 10 is timekeeper B and 11 is timekeeper C.

The data portion 120 (Fig. 7c) of a transmission block may be empty or may contain up to 63 words. The format of the messages in the data portion 120 of the transmission block is dependent on whether the transmission is a TDM mode frame or a democratic mode frame. During the TDM portion of each hundred millisecond cycle, each drop DHC transmits a frame of periodic information, the frame comprising a series of messages, each message comprising a system ID, a status word, and if an analog point, its value. The format of a digital TDM message is shown in Fig. 8b, and of an analog TDM message in Fig. 8c. In both cases, they begin with a system ID word and status word.

The system ID includes a 14-bit system element identifier right justified in the first word of the message. The system ID identifies the nature and source of the data, and is examined by each drop to determine whether the message is of interest. The use of 14 bits permits separate identification of over 16,000 individual data points, i.e., process variables, system conditions, etc.

If the 14-bit number indicates a number in the range of 1 to 254, it simply identifies the drop transmitting the message, as opposed to identifying a single data point. For example, an alarm condition at a drop configured as a printer might be indicated if the printer ran out of paper; this thus provides a convenient communications facility. The two extra bits of the two-byte system ID have the following use. Bit 15 indicates whether the message is an analog point or a digital point. If set, the point is digital, if clear the point is analog. Bit 14 is always set to 1 in TDM messages. This is so the functional processor can distinguish TDM from democratic entries. The status word contains the message's status attributes. If the element is digital the least significant bit of the status word contains the digital value. The two-word analog value field shown in Fig. 8c is only used in analog messages. This field contains a 32-bit floating-point analog value.

Fig. 8d illustrates democratic mode messages which are available in a preferred embodiment. During the DEM portion of the 100 millisecond cycle some number of DHC's will have an opportunity to transmit non-periodic messages which have been requested, either by their associated functional processors, or in response to requests from other drops. The number of DHC's that, in fact, transmit during a given 100 millisecond cycle is limited by the time remaining until the next TDM period begins; eventually all drops have the opportunity to transmit DEM messages. The messages sent during the DEM period fall into two categories, one-shot broadcasts and messages to the originator drop. The one-shot broadcast is used to transmit all attributes about a point element to all drops receiving the point. Such broadcasts are sent when a drop receives a request for a one-shot broadcast from another drop.

The system ID portion of the one-shot broadcast is as discussed in connection with Fig. 8b and c. The WC field is one word and indicates the number of additional words of information in the message. In the case of a request/change message to an originator, this field may be zero. If so, the message is interpreted as a request for a one-shot broadcast of all attributes of the element specified in the system ID field. When the WC field is zero, the DISP and AD fields do not exist. The AA field used in connection with the one-shot broadcast is 1 to 61 words to be stored consecutively in the shared memory. The request/change messages are used to send data to drops. The system ID and WC fields are as described above. The DISP field is used to indicate the position within the data record at which the data being sent is to be stored. The AD field is 1 to 60 words of information to replace one or more attributes of the indicated element. Finally, the general message to originator includes the same system ID and WC fields, but also includes an FI field indicating which of eight input first-in first-out buffers (FIFOs) in the shared memory should be used to store the message. In summary, the request/change message to originator is used to call for specific data which then is to be transmitted using a one-shot broadcast format. A general message to originator might then be, for example, an acknowledgement or similar signal.

5. Data Encoding and Decoding

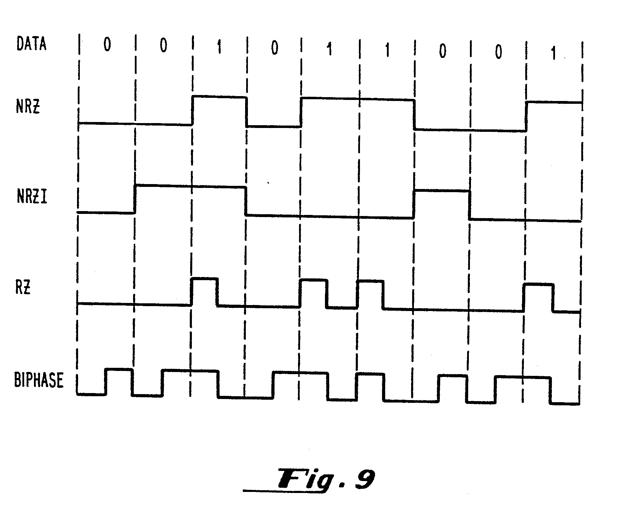

Fig. 9 shows a comparison between various ways of encoding data, several of which are used in connection with the present invention. Data is shown at the first line of Fig. 9 as a sequence of zeros and ones. The following line marked NRZ refers to the "non return to zero" encoding method whereby the signal stays high as long as a 1 is in effect and is low at other times. The next line NRZI ·is a "non return to zero-inverted" method commonly used to reduce the number of data transitions in some data recording systems. The fourth line RZ is a return to zero coding method used to provide a simple half-bit cell high pulse for ones and low otherwise. This scheme obviously does not permit self-clocking of the data. Finally, the biphase coding method used according to the invention for data transfers over the data highway is shown in the fifth line; in this scheme of data transition is present in the center of every bit cell, upwardly for zero and downwardly for a 1, resulting in the wave form shown. Thus, in biphase coding, half of each bit cell is low, and half high; whether the high half is first or second determines whether a one or a zero has been encoded.

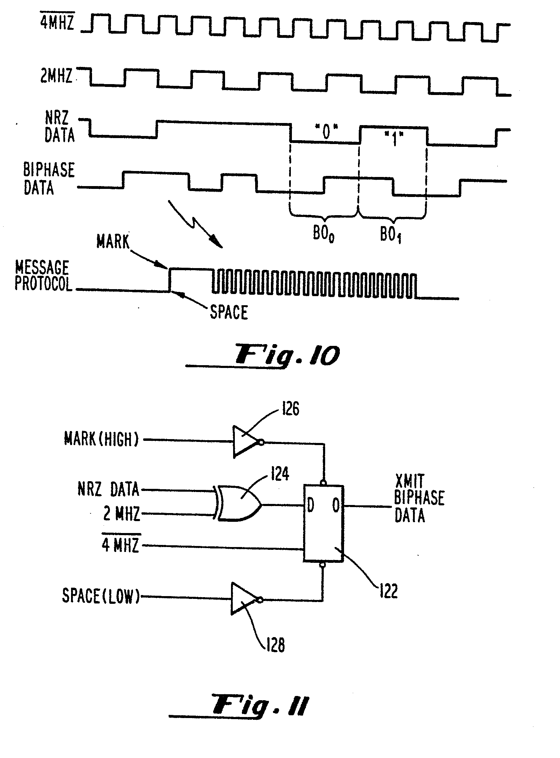

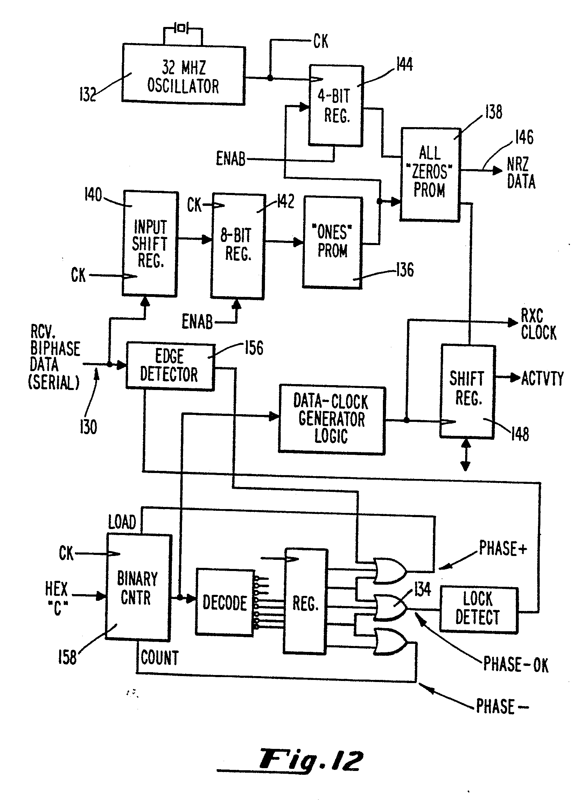

NRZ coding is used within the controllers according to the invention, but the biphase encoding scheme is used over the data highway. Accordingly, means must be provided for translation. This is shown in Fig. 11, waveforms relevant to which are shown in Fig. 10. The conversion is quite simple as shown by Fig. 11. A 4 MHz clock is supplied to a flip-flop 122 along with the result of an exclusive-OR operation performed on the NRZ data to be encoded and a 2 MHz clock. The output of the flip-flop is the biphase data as shown at the bottom of Fig. 10. The message protocol, as shown between Figs. 10 and 11, is as discussed above; that is, a mark generated by inverter 126 causes the transmitter to turn on when a message begins. Spacing is maintained by an inverter 128, resulting in the format shown and discussed above in connection with Fig. 7b.

The biphase data encoding system used according to the invention provides several advantages. One is that since there is a transition for every data bit there is always sufficient frequency information available to make self-clocking possible, so that a single conductor coaxial cable is sufficient. The fact that the net DC voltage is zero according to the biphase coding is also convenient, so no overall DC voltage is built up between the conductor and shield.

Another advantage for communications of biphase coding arises because in biphase coding, each bit encoded in a bit cell has high or a "positive" half and a lower or "negative" half. For exampl?, a one may be encoded as a "high" followed by a "low" in a bit cell, and a zero inversely. According to one aspect of the present invention, in decoding, the relative amplitudes of the first and second portions of each bit cell can be compared to one another to yield relatively noise-free decoding of the biphase data. That is, as long as the first half of any bit cell is higher on the average than the amplitude of the second half, a one has been detected, and vice versa for a zero. The square wave, biphase data shown in Fig. 10 is essentially the idealized data which is generated by the flip-flop. However, in transmission over the coaxial highway, some signal degradation occurs and the square edges are somewhat rounded. In order that the data can be accurately received, it is desirable that means be provided for improving the accuracy of determination of the transitions.

According to another aspect of the invention, a further improvement is made by sampling the biphase data at intervals, weighting the central samples of each half of the bit cell relative to the ends and summing the weighted values, to generate a total value for each half of the bit cell. If the total for the first half is above that of the second, a one has been decoded, and if the second half has the higher value then a zero has been decoded. This offers substantial advantage in terms of noise immunity as even if some substantial faction of the high half of the bit cell goes negative, for example due to a stray voltage appearing on the line for some reason, the odds are good that it will still be decoded properly because of the weighting scheme employed.

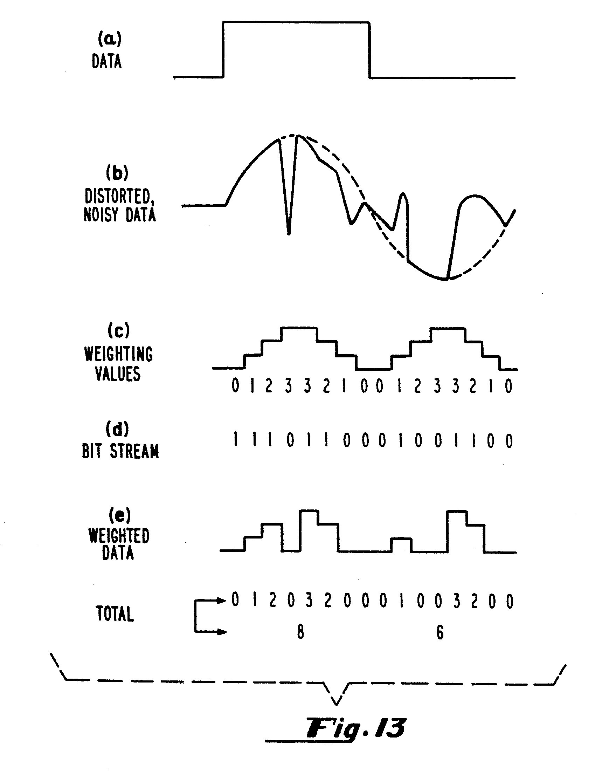

Fig. 13 shows schematically how this can be done. The circuit for doing this is discussed below in connection with Fig. 12. Fig. 13a shows ideal biphase data. A single bit cell has its first half high and its second half low, indicating that a one has been encoded. Fig. 13b shows an extreme example of distorted and noisy data which might be detected; the wave shape shown in Fig. 13a is distorted into a generally sinusoidal shape shown by the dotted line of Fig. 13b, while noise on the line can cause substantial departure from this shape as shown.

As mentioned above, the key in decoding biphase data is to determine which half of the cell has the higher average value. Clearly, the generally sinusoidal signal is more meaningful in the center parts of each cell, because noise cannot be expected to be correlated with the signal amplitude. That is to say, if the maximum signal in the center of the bit cell amplitude is 0.3 volts, minus 0.2 volts of noise will not cause the signal to be detected negative with respect to zero, whereas if the signal value is only 0.1 volt, e.g. towards the end of the bit cell, it will. Accordingly, Fig. 13c shows weighting values which are applied to subunits into which each part of the bit cell is divided. In the preferred embodiment each half of the bit cell is divided into eight subunits. The end units are given a value of zero and the weightings of intermediate units gradually rise until the center units have a relative value of three, all as shown in Fig. 13c. Clearly, other weighting schemes could be adopted. Then if for a given subunit the value of the wave shape is positive with respect to some arbitrary value, the weighting value for that subunit is added to a total for that half of the bit cell. When the entire bit cell has thus been analyzed the totals for each half are compared. If the totals for the first half are higher than the second half a one has been decoded; if the first half is lower then the bit is a zero. Fig. 13d shows how a string of bits, "1" if the wave is positive and "0" if it is negative or zero, can be generated. This string of bits is then applied to the weighted values and the results are summed; the effect is of adding an amount of units determined by the weighting values shown in Fig. 13c, ignoring all negative parts of the wave. The result is shown in Fig. 13e; the first half of the bit cell has a total value of eight and the second half of six so that a one has been decoded. Ideally, of course, in the example given, the first half of the bit cell would have the value of 12 and the second the value of 0.

It will be appreciated by those skilled in the art that the example given is greatly exaggerated. The noise is not usually so pronounced. In fact, according to the preferred embodiment of the invention, bit error rates are considerably below $10^{-7}$.

According to another aspect of the present invention, a phase-locked loop is used to set up the clock which divides the biphase data into the smaller portions which are then weighted relative to one another and summed to generate a statistically better detection of the data. The circuit for doing this and for performing the decoding as discussed above is shown in Fig. 12. Biphase data at a nominal frequency of 2 MHz is supplied at 130 and is sampled at a 32 MHz rate generated by an oscillator 132 so that 16 samples per bit cell are produced. The circuit detects the leading edge transition to find the basic bit cell. After an edge is detected by a detector 156, the digital phase-locked loop counts up to the next edge. Each time this happens, the count is aligned and if necessary adjusted up or down by 1 in an attempt to align the counter interval with the bit cell. The phase-locked loop is synchronized on the eight zeroes separating the mark bit from the flag, shown in Fig. 7b. The phase-locked loop thus expects to see an initial field of zeroes. Detection of this removes the possibility of synchronization 180° out of phase. After two successive phase-OK signals are output by the OR gate 134, the lock condition exists.

The input data is sampled in two periods, the first and second halves of the two element byphase data cell. The data decoding process utilizes two PROMs 136 and 138 to convert the biphase samples to single element NRZ data bits. The "ones" PROM 136 operates first and acts on data previously shifted in from an input shift register 140, and temporarily stored in a register 142. For each biphase bit cell, 16 samples are taken in two eight-bit groups. They are a sequence of bits, 1 or 0, as shown in Fig. 13d, depending on the input wave shape as compared to a reference value. After the first group of bits is shifted in at 140, it is transferred to the 8-bit parallel register 142. The register output acts as an address to the ones PROM 136. The contents at each PROM location contains a number which represents the weighted algebraic value of the logical ones provided by the address, which is simply the 8 bits of data. The PROM output is a weighted sum provided as a nibble; that is, half a byte of data, which is then saved in a four bit parallel register 144. During this time, the second half of the biphase data cell, eight bits, is being shifted in and is processed the same way as the first eight. At this juncture there are two nibbles of data which have been extracted from the 16 samples of the raw data. Both nibbles are available, in the ones PROM 136 and the 4-bit register 144, and together act as an address to the all-zeroes PROM 138. This PROM has two outputs. It outputs a one signal if the hex value of the upper four bits, the first nibble, is greater than or equal to the hex value of the lower four bits. Otherwise, a zero is generated. Upon clocking, this becomes the output non-return-to-zero data at 146. On the other hand, if the all zeroes PROM 138 address is all zeroes or all ones, this means that there is no DHB activity present so that an "activity" signal ACTVTY may be set false. Thus, no activity signal is presented when either all ones or all zeroes are presented as address to the PROM 138.

As mentioned, Fig. 13 shows graphically the relation between an ideal square wave portion of a bit cell, in Fig. 13a, and a typical though exaggerated actual data wave form in Fig. 13b. The weight values assigned to each of the samples are given underneath them in Fig. 13c. It will be observed that the center of the data cell, which can be expected to be disturbed least by noise, jitter and the like, is given additional emphasis by the value stored in the PROM 136 so that the accuracy of the output NRZ data 146 is enhanced.

As mentioned, highway activity is detected by the presence or absence of transitions noted by the PROM 138. "No activity" is defined as absence of three successive biphase codes. The activity signal is used by the microengine discussed below and by the data highway processor and by the timekeepers to ensure detection of received message frames and otherwise to guard against noise appearing as good data.

6.    Timekeeping - Generally

It will be appreciated by those skilled in the art that accurate timing is essential in any distributed control system and the present is no exception. Accordingly, special steps have been taken to ensure that all of the drops are all operating with respect to the same time value. This is done by synchronizing all drops on the entry of the time division multiplexed mode. At the time any given drop broadcasts the command to transfer to the time division multiplexed mode, by setting the "U" bit in the control byte of its frame, this is observed by every drop. Every drop then takes a snapshot of the local time, i.e. records the values of the internal clock which is included in each drop, which it had when the U bit was transmitted. As the mode change is received at virtually the same time by every drop, every drop should theoretically record its time at exactly the same instant. Thereafter, the first three drops to broadcast, which are designated timekeepers, insert an extra word between the C field and the first SID word, which contains the contents of the snapshot each one recorded. Each of the drops including the timekeepers receives this broadcast, so that after the first three broadcasts in the TDM mode each drop has received three time snapshots. The Data Highway Processor within each drop, which contains the local clock, inspects the three snapshot times and takes the average of the two closest. It then compares this average with its own snapshot of the "transfer to TDM" command time and adjusts its clock accordingly. Each processor thus continually stores clock times in its shared memory so that the functional processor can have access to this clock value whenever it has occasion to require it. This process is discussed in additional detail below.

According to one aspect of the present invention, triple redundancy of timekeepers is provided by use of the three separate timekeeper drops. Their basic function is to look for and detect any lost token, i.e. to supply any signals needed to ensure a proper hand-off of the highway from one drop to the next. Broadly, each drop, after transmitting its frame onto the highway, thus passing the token, looks to see if another broadcast comes along within a certain period of time. The premise is that if a broadcast does come along, the next drop perceived the token and carried out its broadcast, whereas if no broadcast were detected this would mean that the token had been dropped. The passing drop first waits 30 microseconds then it times an 80 microsecond window and looks for a new broadcast. If it doesn't see one it increments the address again, and retransmits a frame without a data field, attempting to pass the token to the next drop. Thus, a passing drop could keep incrementing for some time until a subsequent drop recognized its address signal and put out its own message. This could be the case, for example, in a system where there are about 100 drops in numerical order and drops 30 through 39 were off line. In this case, drop 29 would increment 11 times until it finally had the token addressed to drop 40 acknowledge by drop 40's transmission. Note, however, that no "acknowledge" message is actually used; each message includes not only data but also the next token, which implies an acknowledgement that the previous token passing was successful.

The three timekeeper drops also carry out a separate monitor function on the highway. Following each received broadcast each of the three timekeepers times out a respective time; the first times at 240 microseconds, the second at 440 microseconds, and the third at 640 microseconds. If any of these does not see the appropriate token being received, i.e. does not detect a new broadcast within its time, it restarts communication from the start of the time division multiplexed mode. If a first timekeeper for some reason does not sense a broadcast in 240 microseconds, then the second will monitor through 440 microseconds. The second timekeeper is mostly backup for the first. In similar fashion the third timekeeper backs up both the first and second.

The timekeeper timer has three active modes:
1) Normal Mode
2) Timekeeper Mode
3) Reset Mode
In normal mode, the timer is initiated after the MBC transmits a message. If activity is not seen on the highway in 110 microseconds the timer times-out, and the MBC interrupts the MBD.

The timekeeper mode is thus used to detect a failure of the data highway system. The timer is initiated when no activity is seen. If the timer times-out before activity on the highway is seen, a highway system failure is assumed, and the MBC interrupts the MBD.

The MBC timer consists of a programmable array logic chip (PAL) control sequencer, a programmable counter, a divide-by-100 counter, and an input synchronizing register. These logic elements interact to perform the timing functions.

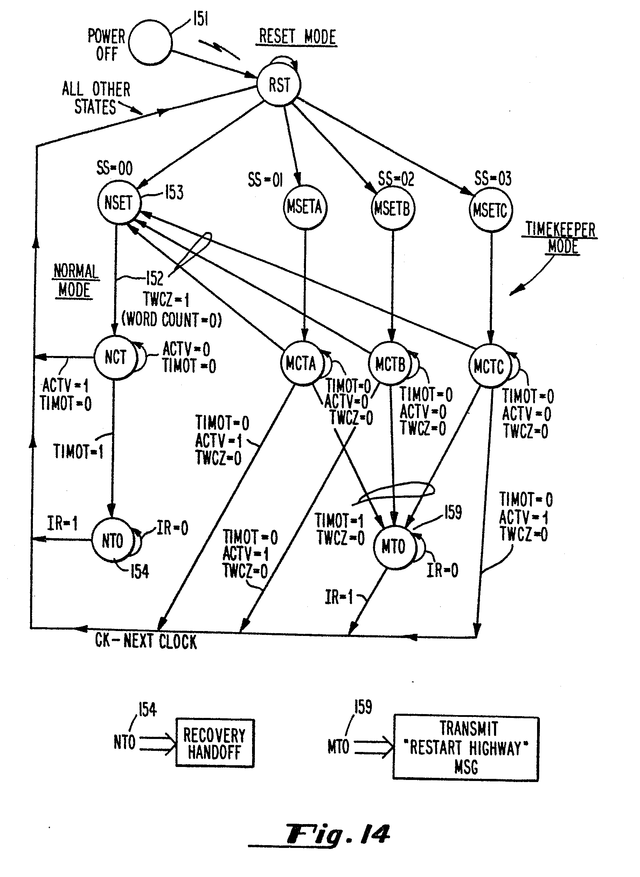

Fig. 14 shows the state transition diagram of this timer. Four signals are shown, and when set have the following meaning:

TIMOT signal means that the associated timer has timed-out;

ACTV signal (equivalent to signal ACTVTY of Fig. 12) means that activity has been detected on the highway;

TWCZ signal means that a transmission is completed; and

IR signal means that an interrupt back to the MBD has been accepted.

The timer has the following primary modes of operation:

1. Reset mode;

2. Normal mode timer - 110 microseconds;

3. Timekeeper A, B, or C mode timer.

Modes are selected by command from the MBD, in accordance with the SS bits. The timer operates only in one mode at a time with the following exception: when in timekeeper mode the control sequencer automatically jumps to operate in normal mode upon receipt of the TWCZ signal at 152, indicating that a message has just been transmitted by the MBC microengine.

The timer enters the reset mode 150 under three conditions. First when commanded to be "off" at 151, next when in normal mode but before a message is transmitted, and lastly whenever any mode change occurs.

The Normal mode (NSET node 153) timing interval is 30 microseconds timed by the microengine and 80 microseconds timed by the Timer itself. Thus this mode starts 30 microseconds "after" the end of a transmitted message, i.e., when the microengine resets and then sets the signal TWCZ to indicate Normal mode start. After starting, the timer then waits for activity to occur (ACTV=1) on the highway, signalling that the "receiving" drop has indeed received the message and is now performing "its" transmission. Activity is detected by the biphase detecting circuit discussed above in connection with Fig. 12, outputting the ACTVTY signal. If ACTV does not occur (become true) within 80 microseconds the counter times out (TIMOT=1) causing the PAL sequencer to set an interrupt at node NTO. A recovery hand-off is then transmitted. This condition prevails until an interrupt reset (IR=1) is

**0132069**

received from the MBD indicating that a message has been transmitted. The timer then jumps to the reset mode 150.

In the timekeeper mode, beginning with nodes MSETA, MSETB and MSETC, depending on the S bits, the respective timer observes the period of time for which there is no highway activity. The three such intervals for timekeeper A, B, and C respectively are 240, 440, and 640 microseconds. The mode is designed to detect that no messages are being transmitted on the highway. For example, if the highway "dies" completely, timekeeper A will time out first, TIMOT=1, and issue a timer interrupt (entering node MTO). A status bit (not shown) is set to indicate timekeeper mode timeout instead of normal mode timeout. This interrupt is a signal to the MBD to initiate a restart. If the drop programmed as timekeeper A fails, i.e., IR does not go high, then timekeeper B, acting as backup, times out at 440 microseconds similarly to perform the restart. Timekeeper C is the final backup timer. On the other hand, if ACTV goes high during the timekeeper mode, the normal mode is reentered at 153 via the reset mode 15Q. As indicated at the bottom of Fig. 14, entry of the node MTO indicates to the MBD that highway restart is required; node NTO indicates that a recovery hand-off is required. The MBD can differentiate between the two by use of the status bit referred to above. When the MBD responds with the appropriate action, the IR signal is detected by the timekeeper, and the reset mode 150 is accessed.

7.    The Data Highway Controller A.    The Data Highway Processor (MBD)

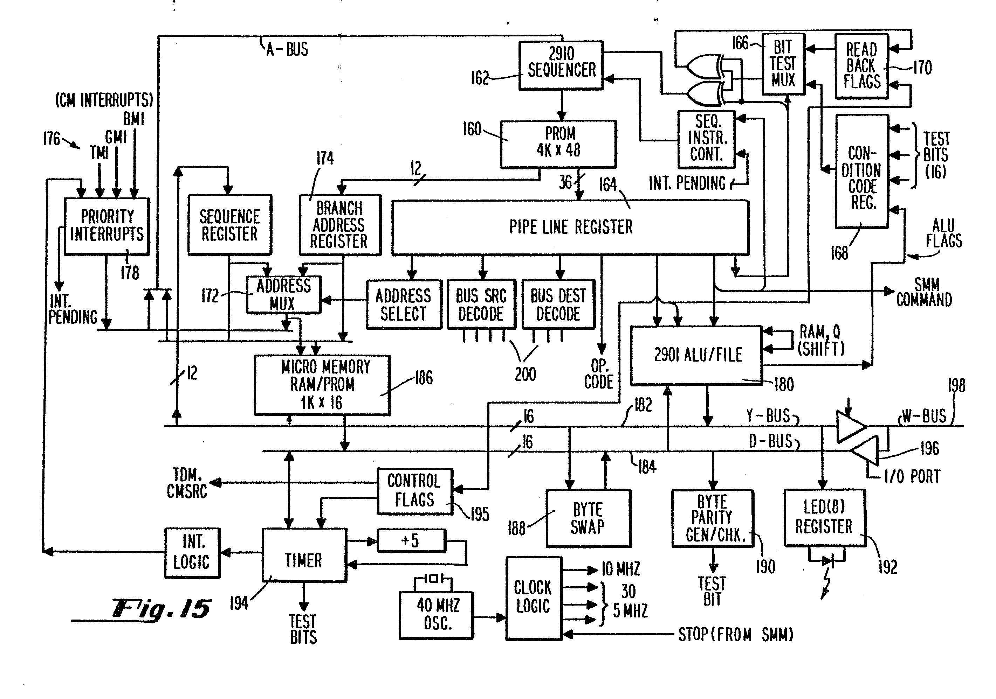

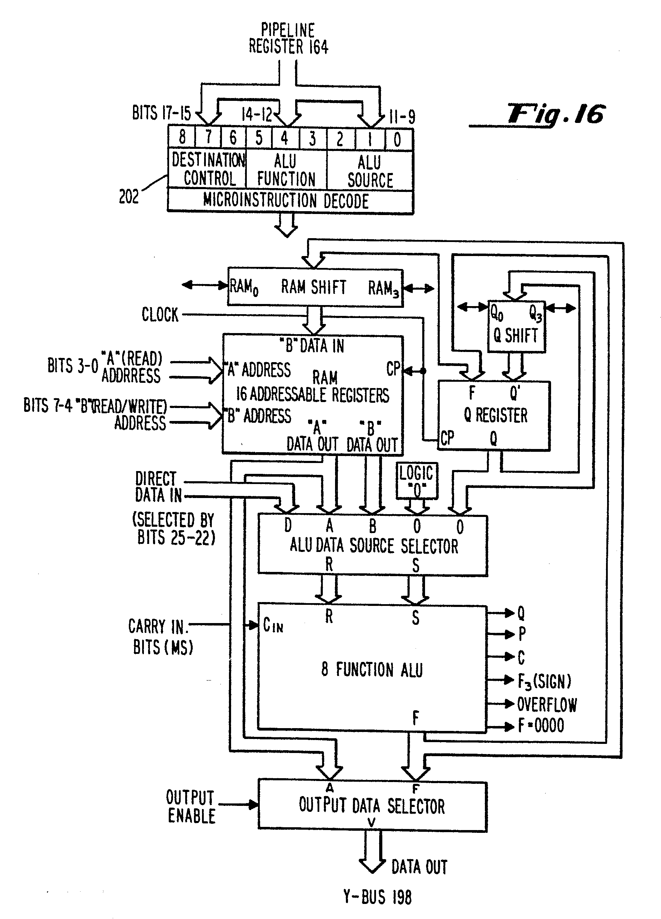

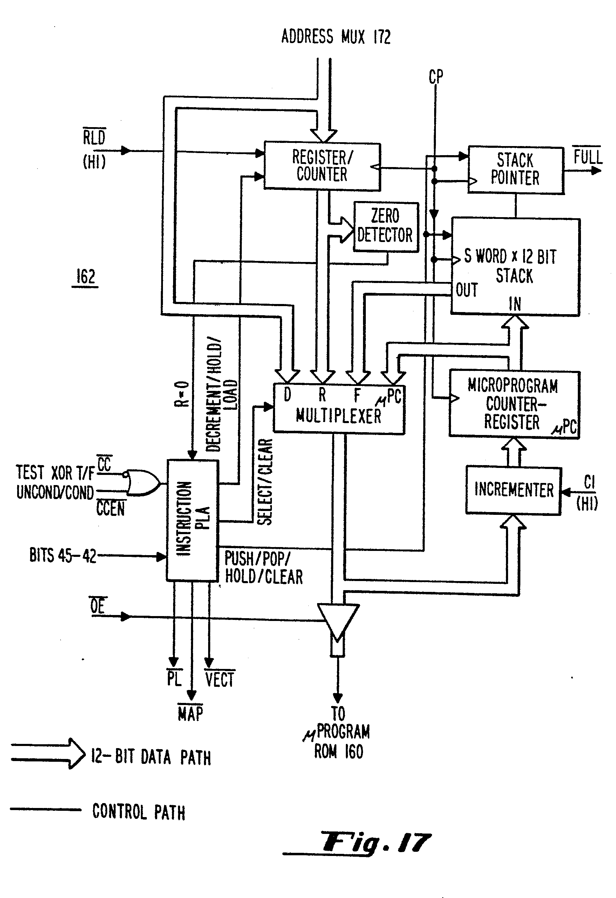

It will be appreciated by those skilled in the art that one of the key pieces of hardware in the system of this invention is the Data Highway Processor, which performs communications between the functional processors which, as noted, are Multibus-compatible peripherals of various types, and the data highway which is highly specific and system determinative. Accordingly, the following detailed discussion of the Data Highway Processor (MBD) card is provided. Fig. 15 is a block diagram of the card while Figs. 16 and 17 are block diagrams of the Advanced Micro Devices (AMD) Model 2901 Bit Slice Microprocessor and the AMD 2910 Microsequencer which appear on the block diagram of Fig. 15.

The Data Highway Processor (MBD) is a high speed bit-slice processor. Its design is general purpose, allowing for processing of parallel data. The following functionally describe the single MBD module. Fig. 15 shows the logic block diagram of this device.

The MBD is a one board data processor intended to control information flow between the MBC communications controller which performs the data encoding/decoding and serializing/deserializing functions, and the MBS shared memory module. It operates at high speed (200 nsec/cycle), providing decision making capability and data manipulation capability through a bit-slice architecture. The device, as indicated in the block diagram of Fig. 15, operates under microcode control of all elements.

The MBD has a microprogrammed structure giving it a 16-bit word length. It operates in pipelined mode, meaning that instruction execution is in parallel with selection of the next microinstruction from microprogram PROM 160. Microcoded instructions contained in the 3k x 48 bit PROM 160 (expandable to 4k) are accessed by the 2910 microsequencer 162. At each clock-time the current instruction is clocked into a pipeline/branch-address register 164 where it is executed on the "next" clock-time. The 2910 162 contains logic that provides sequential execution of instructions, subroutine linkage and looping capability internally as well as pass-through of an externally generated branch address. It is detailed in Fig. 17.

A test tree, consisting of a bit test multiplexor 166, a condition code register 168 and a read-back flag register 170, allows for sequence control based on the logic level of selected bits. Each of the eight read-back flags may be tested and conditionally set or reset.

Further sequence control is accomplished by allowing selection of the "next address" from any of four various sources via an address multiplexcr 172. The address multiplexor 172 controls selection of the "branch address" and hence the instruction that the 2910 162 will next execute. The multiplexor 172 provides an external direct input to the 2910 162 for doing branching via one of four multiplexor inputs. These inputs provide conditional branching capability, multi-way branching via a multi-way branch register 174 and two inputs for branching to interrupt handling subroutines.

A prioritized interrupt structure 178 accommodates eight interrupt lines 176. This structure creates the lower four bits from the microcode address. These along with the upper eight bits of the branch address register 174 become the interrupt address provided to the address multiplexor 172. If an interrupt is pending and if the current microinstruction is interruptible, the 2910 162 will thus be forced to execute a call to the appropriate routine to service the particular interrupt.

The heart of the MBD is a 16-bit 2901 ALU/register 180, the structure of which is detailed in Fig. 16. Besides having a direct access file storage of 16-words by 16-bits, it allows for logical, arithmetic, and shift operations and is under full microcode control. The ALU input/output ports form the basis for two major data busses, the Y-bus 182 and the D-bus 184, for source and destination data. Connected to these 16-bit busses also are: a RAM/ROM micromemory 186, a byte swap register 188, a parity generator/checker 190, a byte LED indicator register 192, a programmable timer 194, and an I/O port 196, connected to the W-bus 198 (DHC bus) through which connection to the remainder of the DHC is made.

The RAM/ROM micromemory 186 is addressed using the same address as supplied to the 2910 sequencer 162. The micromemory 186 has 512 words of read only memory (ROM) and 1024 words of random access memory (RAM). Two cycles are required for access. In the first the address is presented; data is available on the next cycle.

The 8253 programmable timer 194 is accessed with the lower eight bits on the D-bus 184. A data byte is loaded into the timer 194 from micromemory 186, and a data byte is read from the timer 194 into the ALU 180 from this same bus 184. The timer 194 is controlled via six control flags 195 which originate from the microcode.

The MBD can access the MBC and the MBS, the other two major system modules, via the W-bus 198. Two decoders 200 allow for selection of any source and/or destination(s) registers under microcode control.

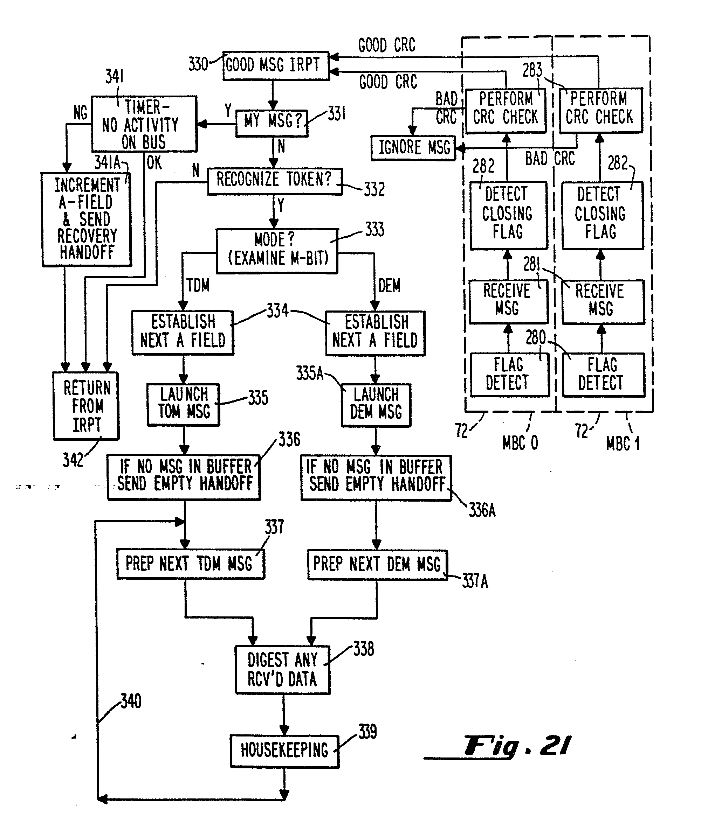

Figs. 21-24, discussed below, detail the sequence of MBD operations.

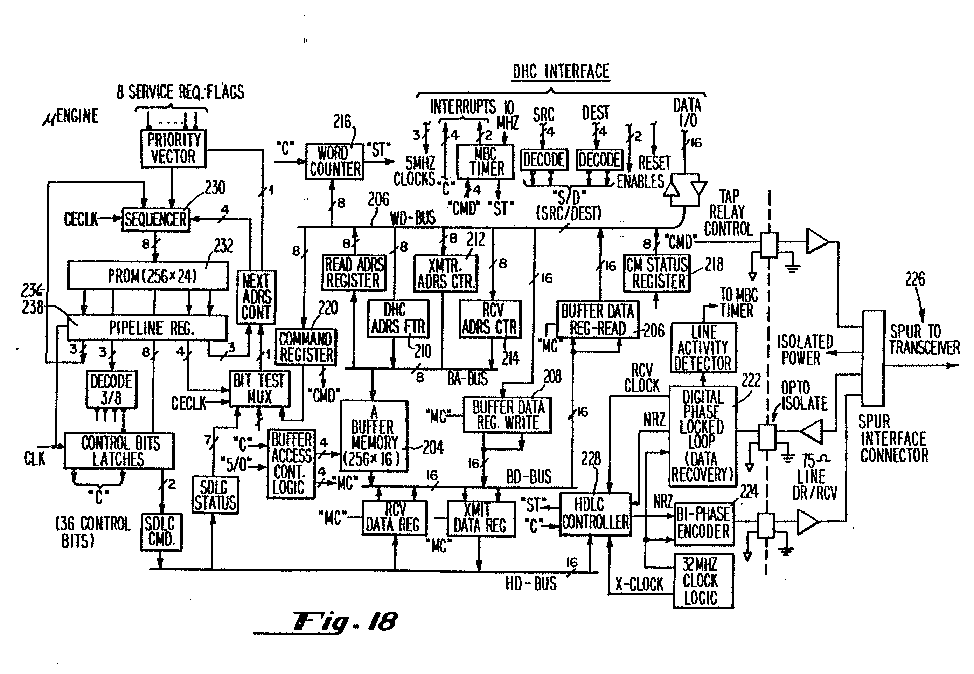

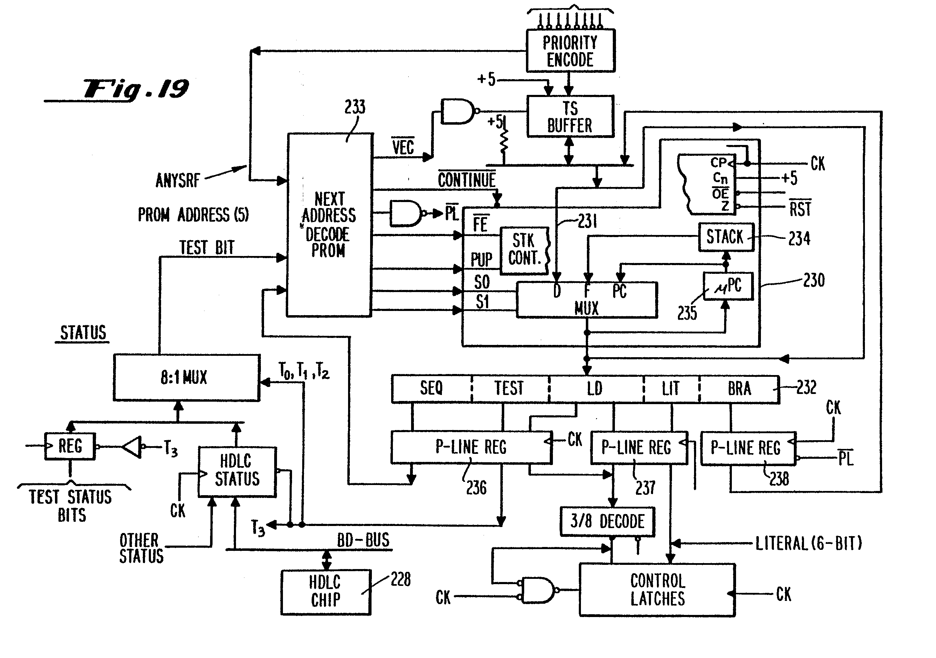

The duties that the MBD is programmed to perform may be described in general as follows. The MBD accesses the data highway communications card (MBC) and message buffer discussed below in connection with Figs. 18 and 19 for parallel data. The buffer is dual ported and resides on the W-bus 198 under control of the MBD I/O logic or the MBC microengine (Fig. 19). Received data is accessed by the MBD in response to an interrupt sent by the MBC. The MBD inspects each system ID (SID). The MBD then fetches control information from the Data Recognition Array (DRA) portion of the shared memory (MBS) and uses this information to determine if the Functional Processor is interested in any of the information contained in each of the receive word messages. If so, other information contained in a portion of the MBS referred to as Data Definition Table (DDT) indicates where the data is to be stored.

While processing the data blocks and conditionally storing data words in MBS, MBD, in background mode, fetches certain control information (from the same MBS) directing it to the System Elements (i.e. parts of the transmitted word) which are to be transmitted. From these system elements, a transmission block is then assembled in the MBC buffer memory for output.

At transmission time the MBD prefixes the data block with hand-off control information that is used by the receiving MBD's to determine which one among them will be next to transmit. This data is then transmitted (by the MBC) after the message length (word count) is loaded into the MBC by the MBD, which take place over the W-bus.

The following is a typical example of the MBD receiving and transmitting data in conjunction with the MBC, MBS and the Functional Processor.

The message buffer is allocated as a 128 word circular receive buffer and two 64 word transmit buffers--a TDM buffer and a Democratic mode buffer. The MBD begins message reception by loading the DHCP Register with zeros to point to the beginning of the receive buffer. A command is then sent to the HDLC controller which results in the HDLC Communications Controller having its receive data path enabled. The serial NRZ data from the receive biphase decoder is shifted into the HDLC Controller which performs zero insertion/deletion, FLAG stripping and CRC accumulation. The HDLC controller used can be the Model No. 2652 from Signetics or Motorola and is physically located on the MBC board.

Meanwhile, the balance of the message is stored in the buffer, and after closing FLAG detection, the HDLC controller will perform the CRC check and inform the HDLC control logic of the result. The HDLC control logic will then interrupt the MBD with one of two "message completion" interrupts: one which indicates that the message was received without error, or another that the CRC or other frame status was not correct. If correct, the contents of the RCVA register in the MBC will be saved by the microprocessor to point to the beginning of the next message; then the DHCP register will be loaded with the address of the beginning of the current message. This vectors the microprogram to a routine that examines the first word of the message. As discussed above, this contains the ADDRESS and CONTROL fields. These are examined in order to make such decisions as to whether the drop is being handed-off to. If the hand-off is to the drop, the MBD becomes the primary drop and stores hand-off information into the waiting transmit message and initiates a transmission.

The MBD then sets about the task of storing data (if the associated Functional Processor (FP) is interested in it) in the dual-port MBS. In doing this, the MBD uses the DHCP register to access the message buffer so that the RCVA counter can be used at the same time by the HDLC control logic for receiving the next message.

If the CRC or other frame status was found to be incorrect, the MBC will issue a Bad Message Interrupt to the MBD. In response, the MBD will set the RCVA counter back to the end of the previous message and the bad message will be ignored.

While data is being input from the DHB, the MBD will operate in background mode, between receive interrupts, to fill its transmit message buffers with messages to be output at the appropriate time. It does this by scanning the Flag bytes in the Data Definition Table to ascertain what data is to be output and then obtaining the output data. The MBD utilizes the DHCP register to store away the message to be transmitted for this purpose. Transmission takes place after a message is assembled in the message buffer and at the completion of reception of a message in which a hand-off to the drop is indicated. The MBD loads the XMTA register with the transmit message starting address and the WDCT counter with the transmission block length which commands the MBC to initiate transmission. Data will be transmitted byte by byte until the word counter has decremented to zero, at which time the HDLC control logic, having received its own transmission wrapped back, raises a good message interrupt (GMI), or a bad message interrupt (BMI) to the MBD interrupt logic.

Fig. 16 shows a detailed block diagram of the 2901 microprocessor 180. This will basically be self-explanatory to those skilled in the art. The drawing shows the connection of the pipeline register 164 to the microinstruction decoder 202 and shows the connection of the various bits supplied to the ALU according to Fig. 15. The output connection of the microprocessor 180. is made to the Y-bus 198 as shown.

Similarly, Fig. 17 which shows a block diagram of the 2910 microsequencer 162 shown in Fig. 15, will also be self-explanatory to those skilled in the art. It has input connection from the address multiplexor 172 and output connection to the microprogram ROM 160, both of which are shown in Fig. 15.

Those skilled in the art will recognize how the components shown in Fig. 15 and detailed on Figs. 16 and 17 work together to provide the Data Highway Controller. Basically, the microprocessor 180 does the actual computation, while the microsequencer 162 selects the data and instructions to be supplied from PROM 160 to the microprocessor 180 via pipeline register 164.

A flowchart of the MBD's operations is found below at Figs. 21-24.

B. The Data Highway Communications Card (MBC)

As discussed above, the data highway processor card MBD is interfaced to the data highway by means of the data highway communications card MBC. These two, together with the shared memory module MBS make up the data highway controller. The data highway communications card MBC will now be described. The MBC card provides for the electrical interface between the MBD and the spur cable which makes the physical connection between the drop and the data highway. Furthermore, the MBC is a logical link between the drop and the data highway transceiver. The MBC performs five main functions which are:

1. MBD input/output interface;
2. protocol generation and error detection;
3. coding and decoding of biphase data;
4. spur cable interface; and

5. timekeeper/timer.

The input/output interface to MBD can be described as follows. The MBC allows for parallel data transfer to/from the MBD processor. Eight bus interface registers in a buffer memory of 256 16-bit words are connected to the W bus. This is shown by Fig. 18. There, the buffer memory is shown at 204 as connected to the WD-bus 206 which connects to the W bus found at 198 of Fig. 15 at the point marked "Data I/O". The eight registers can now be described in detail.

The first two registers, Buffer Data Register-Read (BDRR) 206 and Buffer Data Register-Write (BDRW) 208 are data registers for reading and writing the buffer. Each is 16-bits wide (1 word) and holds the word just-read-from or to be next-written-to the buffer memory 204.

The next three registers are the DHC address pointer (DHCP) register 210, the transmit address counter register (XMTA) 212, and the receive address counter register (RCVD) 214. The DHCP register 210 is controlled only by the MBD in routinely accessing the buffer 204. Each access, whether a read or write (or any mix of reads or writes), causes an automatic increment of the address. Finally DHCP may be read-back by the MBD.

Two additional registers, XMTA 212 and RCVA 214, can be byte-loaded from the MBD with an address value. After loading they are ready for the MBC to use for accessing buffer 204, in transmitting or receiving a message. XMTA 212 cannot be read-back by the MBD but RCVA 214 can with the following restriction: the contents of RCVA 214 are only current for reading just after the occurrence of a good message interrupt (GMI). This means that RCVA 214, when read, always contains the end-address of the most current message received.

The word counter or WDCT register 216 also is loaded from the W-bus. Its value tells the MBC how many words are to be transmitted in the next outgoing message.

Decrementing of WDCT 216 is done by the MBC as the message is transmitted; WDCT cannot be read by the MBD.

The final two registers 218 and 220 on the W-bus are for status and commands, respectively. These are referred to as CMSTAT 218 and CMCMD 220. Each is 8-bits wide, and in general, they allow for the MBD to control the MBC as if it were a peripheral device. Most notably the MBC may enable/disable the MBC (all the registers on this interface) in order to effect redundant operation. The status register 218 however may be read by the MBD at any time.

Toward the left of the drawing shown as Fig. 18 is the microengine sequencer 230 which will be discussed in detail below in connection with Fig. 19. To the right are shown elements, some of which have already been discussed, such as the digital phase-locked loop 222 which was discussed above in connection with Fig. 12 and the biphase encoder 224 which is the circuit shown in Fig. 11. Also shown in Fig. 18 are optoisolators and drivers used to actually make the connection to the spur cable 226 which, in turn, connects the drop to the transceiver 72 and the data highway.

The inner mechanics of the MBC are dedicated to the task of data transmission and reception. This requires that parallel data messages be taken out of the 256-word buffer 204, one word at a time, and be serially transmitted up the spur 226. Concurrently the MBC must detect and receive incoming serial message frames, strip out the data and store it in the buffer 204.

To do this the MBC uses a single chip HDLC-protocol communications controller 228. As mentioned, this may be a Signetics or Motorola part No. 2652. One of the main jobs of this chip is to perform byte synchronization. It does this by recognizing a special flag character in the receive data stream. The HDLC also performs the "modem" function for each drop, i.e. transforms byte-wide data into bit-serial, NRZ-format data, which is then transformed into outgoing biphase data by the circuit of Fig. 11. The incoming biphase data is converted to NRZ data by the circuit of Fig. 12, and thence to byte-wide data by the HDLC chip 228.

This chip and all of its related data registers are controlled by a "Microengine" or microsequencer 230 shown in Fig. 19. The microengine allows for: control of 36 timing/control signals, for testing of 16 status input lines, and for a priority interrupt structure of 8 status request flags, sometimes referred to as microinterrupts. Fig. 19 shows the details of the microengine including details of the 24-bit microword.

The microengine of Fig. 19 is driven from the clocking system of the MBD and runs exactly in step with it. This is critical to the system design due to the buffer memory access scheme used. Both the MBD and the microengine access the buffer 204 randomly. The microengine, however, always performs two consecutive accesses (two reads or two writes). Furthermore, the MBD is logically prohibited from making two or more successive buffer accesses. If simultaneous access occurs the MBD receives higher priority. This ensures that if the MBD was concurrently (asynchronously) accessing the buffer 204 at least one of the two accesses by the microengine would be valid.

The microengine performs seven basic sequence operations, any one at a time. These sequences are:

1. Initiate transmit
2. Set start-of-message flags
3. Transmit buffer empty service
4. Receiver buffer full service
5. Receiver status check
6. End of transmit service
7. Reset sequence

Any one of the first six sequences are initiated when its particular microinterrupt is activated to the microengine. At the end of any routine (sequence) the microengine

"checks" for any pending vectors. If any exist the microengine will take a vectored-jump directly to the appropriate address (in firmware) of the service routine. If no microinterrupts exist an "idle" state is entered. During idle, continuous checking for the next microinterrupt occurs.

One of the main components of the microengine (Fig. 19) is the 2911 microprogram sequencer 230. This is also an Advanced Micro Devices part. The 2911 230 is an address controller which sequences through microinstructions contained in microprogram ROM 232. Two of the 2911's are cascaded to generate an eight-bit address.

The 2911 sequencer can select from one of four sources, to obtain the output address. They are:

1.  A set of external direct inputs 231 (D);

2.  External data from the D inputs, stored in an internal register (not shown);

3.  A four word deep push/pop stack 234;

4.  The previous instruction processed by microprocessor 235.

The output of the 2911 supplies the address for the microprogram ROM 232.

The output of the ROM 232 is clocked into the pipeline registers 236-238 which holds the various portions of the current microinstruction word. The following shows the definition of the microprogram word fields.

| BIT | 23    20 | 19    17 | 16       14 | 13    8 | 7    0 |
|-----|----------|----------|-------------|---------|--------|
|     | TEST BIT SELECT | SEQUENCE | LITERAL DESTINATION | LITERAL | BRANCH ADDRESS |

The remainder of Fig. 19 should be relatively self-explanatory to those skilled in the art.

C.    The Shared Memory (MBS)

The third major component of the data highway controller (DHC) is the data highway shared memory (MBS) card. This card interfaces the functional processor to the highway processor MBD. It is an input/output buffer for the data highway controller DHC and provides extended memory for the functional processor. The shared memory card has 32K to 128K bytes of RAM in a dual-ported device configuration; an additional 128K can be used for functional processor memory. The dual-ported feature allows simultaneous access to the shared memory by the DHC and functional processor at all times, without interference. The shared memory is the only part of the data highway controller of which the functional processor is "aware", i.e., it is the only other card on which the functional processor relies for data. The MBC, MBD, and MBS each consume one slot, in the Multibus card cage 90 (Fig. 6) although of these only the MBS makes connection to the Multibus. The data highway shared memory thus provides the connection between the functional processor which is connected to the Multibus, and the DHC bus to which the MBD, MBS and MBC are connected.

The shared memory has several important functions to perform. Chiefly, it provides a place for the functional processor to store data which it desires to output to the highway. This data is then taken by the highway processor and transmitted by way of the communications card to the data highway. Similarly, the shared memory stores data which has been taken from the highway by the highway processor for use by the functional processor as required. In this way, the functional processor need pay no attention to the mechanics of communication, but need only take data from the shared memory or input it to the shared memory as required. Instead, the highway processor has the job of translating the functional processor's needs and commands and effectuating them over the data highway. The MBS card is built on an extended Multibus outline. The RAM memory array used uses either 16K or 64K dynamic RAM memories on the same printed circuit board. The dual port portion of MBS can be expanded from 32K bytes to 128K bytes by adding the necessary dynamic RAM memories to the identical circuit board, while 128K of additional, single-ported RAM can be added for the functional processor's use.

The MBS receives memory requests from both the interface ports and communicates with the appropriate interface port. The MBD has priority over the functional processor if memory requests are received from the MBD and the functional processor simultaneously. If the MBD is communicating with memory and the functional processor wants to access memory, a section of the memory logic will test an MBD "hold memory" flag and hold off the functional processor start until the MBD is complete. However, this lock will not occur if the bus busy signal is active.

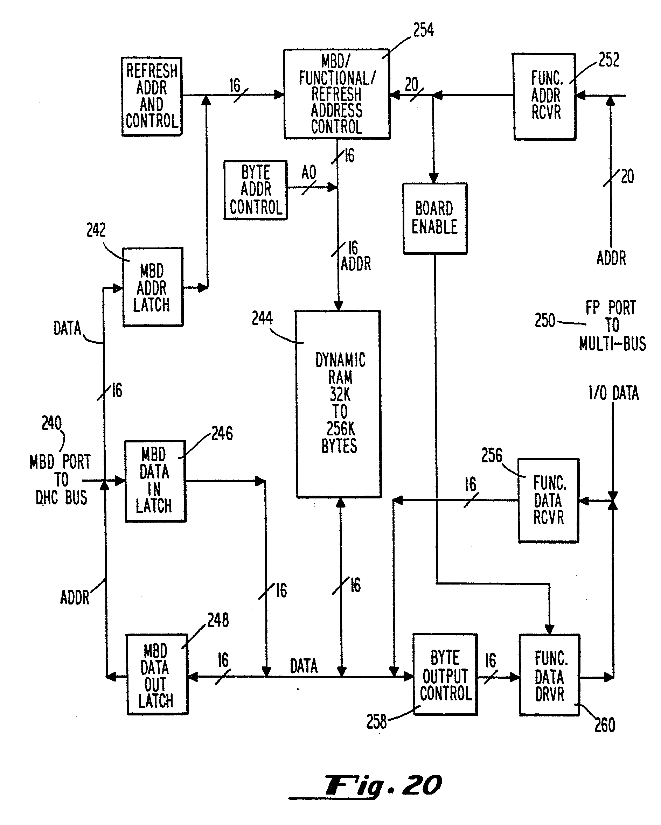

Fig. 20 shows a block diagram of the dual port shared memory. The DHC bus, including both data and address, is supplied at the MBD port 240 at the left of the drawing, while the Multibus address and data lines, comprising the functional processor port 250 appear at the right of the drawing. The addresses are generally handled by the elements shown at the upper portion of the drawing, while the data flow is through the bottom. Accordingly, addresses received from the MBD port 240 are latched in a latch 242, and are used to access the RAM 244, while the incoming data is latched in a latch 246 prior to being passed to the RAM 244. On the other hand data passing outwardly through the MBD port 240 is latched via a latch 248. Similarly, addresses received from the functional processor port 250 are received in a receiver 252 and

52    **0132069**

become an address to the RAM 244 by way of the MBD functional/refresh address control 254, while data received from the FP port 250 is latched in a functional data receiver 256 prior to being supplied to the RAM. Data output to the functional processor port 250 goes by way of a byte output control 258 to a functional data driver 260 to drive the Multibus line. The control of the MBD port 240 is performed by commands carried over an MBS command bus.

The available commands are:

1.    Increment address, then read
2.    Increment address, then write
3.    Read at current address
4.    Write at current address
5.    Increment address, write byte to low half of word
6.    Write byte to high half of word at current address
7.    Increment address, then read and unlock
8.    Increment address, then write, and unlock
9.    Read at current address, and unlock
10.    Write at current address, and unlock
11.    Increment address, then read, and lock
12.    Increment address, then write, and lock
13.    Read at current address, and lock
14.    Write at current address, and lock.

Except for the two byte write commands 5 and 6, all accesses are word accesses. The address to use is contained in the MBS address latch 242 which is loaded by the MBD. On the second cycle after a read command, the MBD can issue a command which enables the data that was read onto the DHC bus.

The address latch 242 receives the address signals over the DHC address and data bus from the MBD and latches the address when the MBS is the MBD destination. The address latch 242 is used for either reads or writes.

For a memory write operation, the data information from the MBD is received over the DHC address and data bus and latched in latch 246 when the MBS is the MBD destination.

For a memory read operation, the data is enabled onto the DHC address and data bus via the MBS data out latch 248 when the MBS is the DHC address and data source.

The FP port 250 interfaces with the Functional Processor over the Multibus. The Multibus address lines are received using buffers 252.

As is usual in the art, the Multibus data lines are buffered in reception and transmission by receivers 252 and drives 260, respectively.

The following signals are received from the Multibus:

1.   Memory Write Command
2.   Memory Read Command
3.   Bus Busy
4.   Byte High Enable
5.   Address Bit 0

Transfer Acknowledge is a signal transmitted over this bus to the Functional Processor.

The two ports of the MBS are multiplexed together using the enables of the various tristate logic receivers. When the Multibus has control of the memory bus, the Multibus interface logic sections are enabled to communicate with the internal RAM memory. If the MBD has control of this memory bus, then the MBD logic sections of the memory board are enabled to communicate with the internal RAM memory.

8.   Data Highway Processor Operations

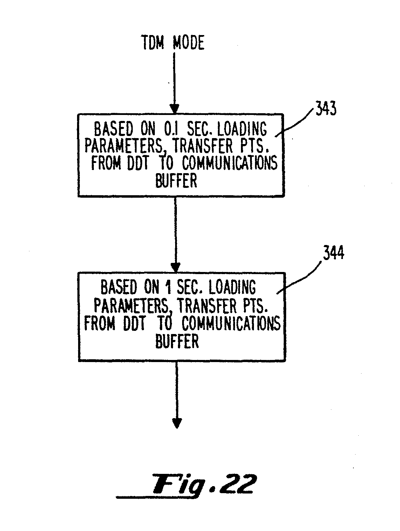

Fig. 21 shows in broad concept the flowchart of the data highway processor (MBD) operations. It comprises blocks 337, 337A and 338 which are detailed in Figs. 22, 23 and 24, respectively. The logical beginning point of the flowchart is with the reception by the MBD of a "good message interrupt" from one of the two communications cards MBC 72 at 330. This signal is generated by the MBC's 72 as shown at 280-283. After beginning and ending flags (Fig. 7c) have been detected at 280 and 282, CRC checking is performed, as well known in the art, at 283. The MBD takes the message from whichever MBC 72 first indicates GOOD MSG INTERRUPT at 330. In this way, both highways and both MBC's are constantly on-line, and redundancy is provided without changeover switching, designation of one or the other as primary or secondary, or other complications.

In particular, according to the present invention, the physical location of the two cables which are the data highways may be different, so that any local source of noise will only affect one cable, for example.

Reception of the good message interrupt at 330 indicates that the last message was received, so that the drop does not have to increment the address field and send a recovery hand-off message. It then looks to see at 331 if the message just sent was its own message. If not, the drop then looks at 332 to see if the last received message was a hand-off to it. That is, it looks to see if its own token is in the A field of the last received message. If not, the data highway processor returns at 342 to whatever it was doing when it detected the "good message interrupt" at 330.

At 333, having recognized its token, the first thing done by the DHC is to examine the M bit of the C field, in order to determine whether a TDM or a democratic mode transmission is to be made. In either case, the next A field is first established at 334. That is to say, the A field, which is the index to the bus allocation list, is incremented so as to provide the proper token for the next drop in the transmission sequence. Then, if the TDM mode is entered, the next TDM message, which will have been assembled in the output buffer as will be described immediately hereafter, is launched at 335. If no message is found in the buffer, an empty hand-off, i.e. a message simply containing a token and the beginning and ending bytes is sent at 335.

**0132069**

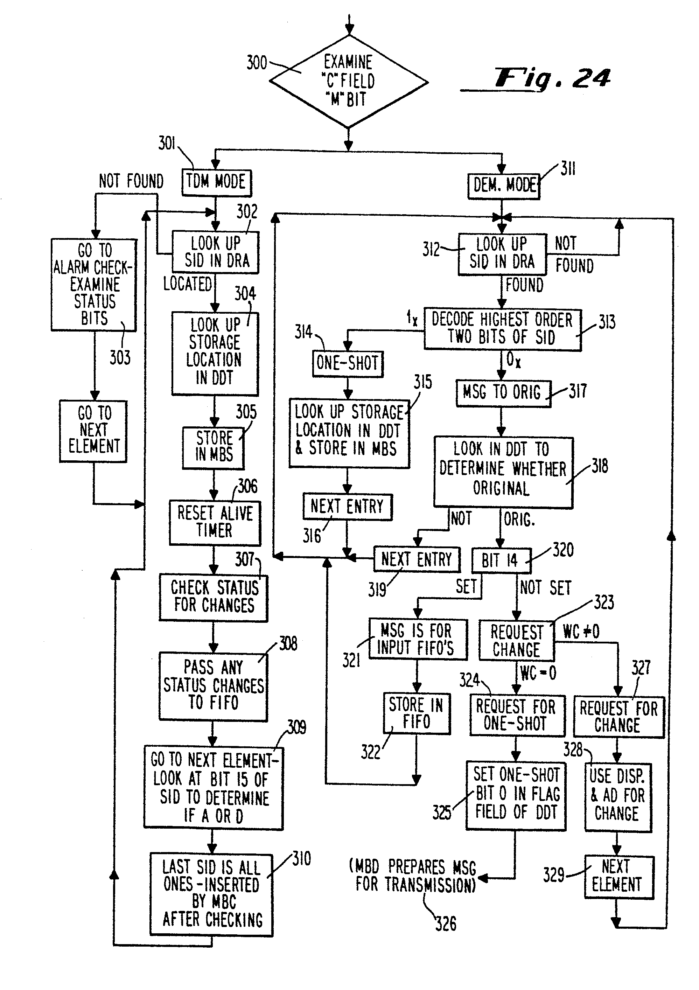

The next step in the TDM mode is to prepare the next TDM message 337. This is discussed in detail below in connection with Figure 22. After that, any previously received data is digested at 338; this is discussed in connection with Figure 24. Finally, with all the output buffers being filled and any received data having been digested, housekeeping can be performed at 339. This comprises such duties as maintaining the system clock signal, voting on bus allocation lists if any conflicts should exist between the timekeepers, and the like. As shown at 340 the processor then returns to block 337 to prepare the next TDM message, because the TDM messages are continually updated in case the functional processor reports any changes in the data which should be reported in the next TDM message. The next democratic message, by comparison, need not be so updated.

The same general process is followed if the message to be sent were democratic; the A field is updated at 334, the message launched at 335A, being an empty hand-off if no message is found in the buffer, 336, and the next message is prepared at 337A.

If it had been instead determined at 331 that the good message interrupt related to the drops' own message, it then at 341 sets a timer to run 110 microseconds to determine whether any subsequent activity occurs on the bus. If so, it can be assumed that the next drop successfully accepted the token. If not, it is possible that an error has occurred. In this case, the drop again increments the A field, thus incrementing the token to the next drop, and sends a recovery hand-off message at 341A. This can be repeated until the index completely wraps around the bus allocation list, indicating that the drop which is transmitting is probably the source of the error. In this case, it can take itself off-line.

On the other hand, if the timer activity is properly detected, the drop returns from interrupt status as at 342 and goes back to whatever it was doing previously.

As discussed above, certain portions of the system according to the invention can preferably be provided in redundant fashion. Typically, redundant data highway coaxial cables, communications interfaces and transceivers are provided, both feeding the data highway controller bus, for access by the data highway processor. The Communications Interface (MBC), as mentioned above, looks at the CRC field of each message received and strips it off when the message has been correctly decoded. They thus generate the "good message interrupt" signal just mentioned. This is a useful feature, because in this way whichever transceiver first provides the good message interrupt signal is accessed by the data highway processor for the message. In this way, both transceivers are constantly on line and both data highways are used interchangeably, rather than, as more usual in the prior art, one being designated a master and one a slave or one primary and one secondary. In this way, both are continuously being operated and are available without any explicit transfer of control from one to the other, which could lead to further synchronization problems, lost messages and other difficulties. This technique also improves the system's bit error rate as a random error on one coaxial highway will normally not coincide with one on the other.

A.    Generation of TDM Mode Messages

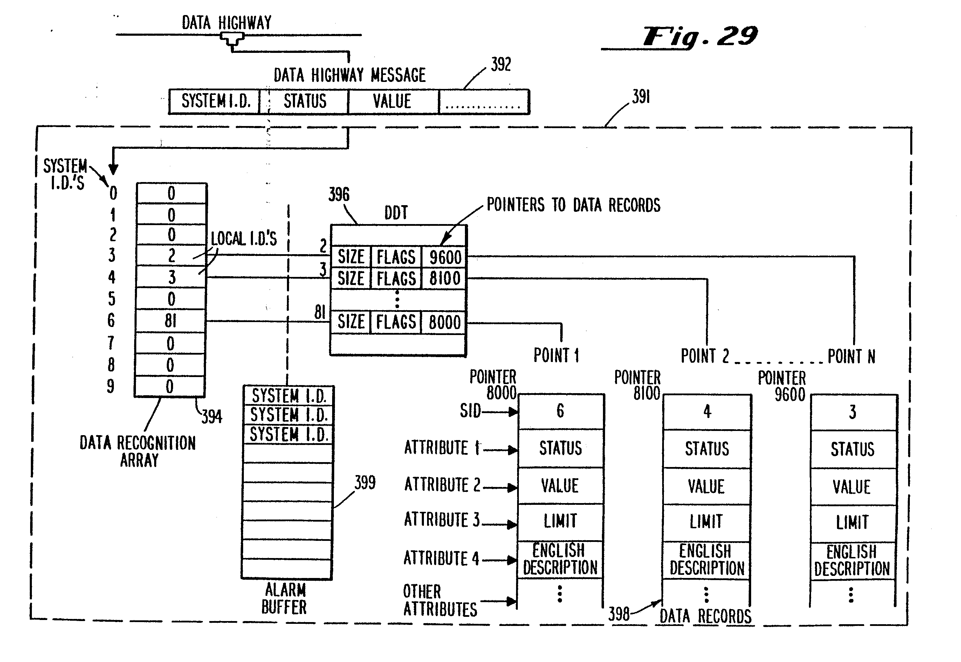

As mentioned, Figure 22 shows the generation of the next TDM message. First is considered at 343 the loading parameters which indicate how many points it is desired to transmit at tenth-second intervals. Some number of points is transferred from a tenth-second originator segment of the data definition table (DDT) of the shared memory (see Fig. 29); similarly at 344 "one second data", i.e., data transmitted once per second, is transferred from the one second originator segment of the DDT to the communications buffer. Thus, for example, any given message

**0132069**

transferred from the output buffer upon detection of the token as discussed above will comprise some data transferred at one tenth second intervals, such as process control variables used in feedback loops, and ordinarily a lesser number of variable values which are transmitted at one second intervals, such as values which do not change rapidly or are needed only for CRT graphic updates.

B.    Generation of Democratic Mode Messages

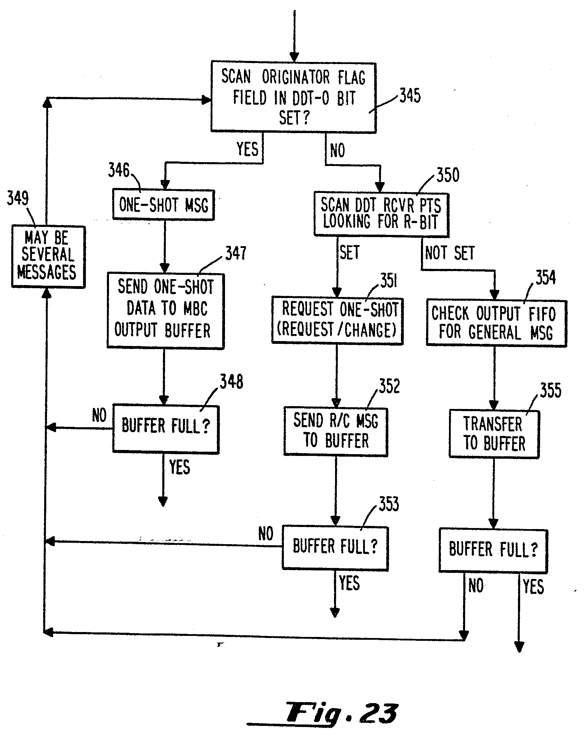

Figure 23 shows the process by which the next democratic mode message is generated. At 345, the O-bit of the DDT flag field is checked to determine whether a one shot message is called for or whether a request/change or general message is to be sent. If this bit is set, a one shot message is to be sent, at 346, and the one shot data required is simply sent from the shared memory to the MBC output buffer at 347. If this buffer is full at 348, processing stops. If not, the originator flag block 345 is again accessed in case several messages are to be sent, as indicated at 349. If the flag field O bit is not set, the receiver points in the DDT are scanned looking for the R bit 350. If it is set, this means a request/change message is to be sent at 351, and whatever data is called for by the drop that sent the request is sent to the output buffer at 352. If the buffer is full processing stops at 353, and if not, the block 345 is again accessed.

Finally, if the R bit is not set at 350, a general message may have been called for. The processor checks the output FIFO in case the functional processor has placed any general messages there to be sent at 354. If so, they are transferred to the output buffer at 355. Again, if the buffer is full, processing stops; if not, block 345 is once again accessed.

C.    Digesting Received Messages

As noted the priority of the MBD operations is first to make sure all the TDM messages are prepared, then to make sure all the democratic messages are prepared, and finally to digest any received messages. In this way, data

highway operations are never permitted to be interrupted, for example, by decoding received messages. This is another advantage of the distributed processing system of the invention; no system-wide interrupts are required, and the highway keeps operating regardless of what errors may arise at a drop.

The following is a description of the way in which the system decodes the words received; reference is made to Fig. 24.

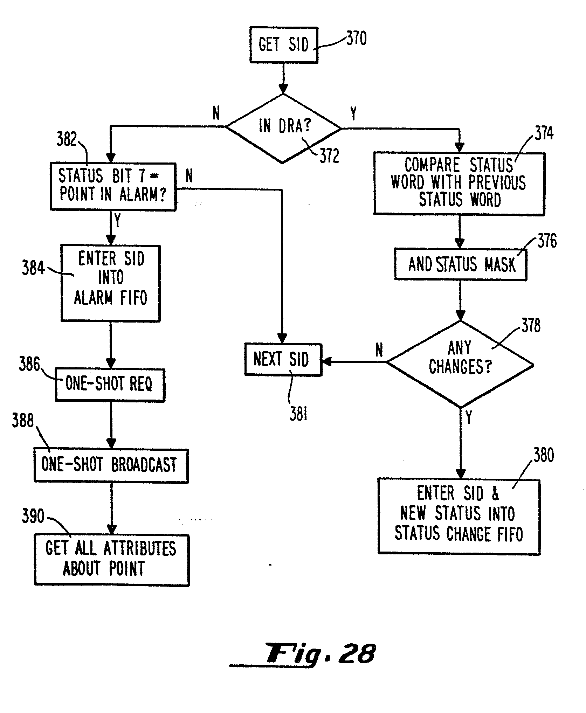

The first step taken at 300 is to examine the control or C-field of the word. If the M bit is set, at 301, it indicates that the time division multiplex mode is in effect. The processor then looks up the system identifier (SID) in the data recognition array (DRA) at 302. If it is located, this means that the contents of the message are of interest to that particular drop. If the SID is not found, an alarm check can be accessed as at 303. This is discussed below (Fig. 28). If the SID is located in the DRA, the proper location of the data is determined by look-up of the DDT table at 304. The data is then stored at that location in MBS at 305 and the alive timer is reset at 306. This timer is used to measure the time between updates of a particular data point, and can be used to inform the functional processor (by way of a bit in the status word) that a particular value is stale. The status word ma: then be checked for any changes at 307; this is also a way of getting additional information to the functional processor, and is effected by passing any such status changes to a FIFO at 308.

The next element of the message is then accessed at 309. Bit 15 of the SID is examined to determine whether the data word is analog or digital. If it is digital, only the status word is relevant, as it is defined above in connection with Fig. 8b. If analog, the status word is relevant as is the analog value which is two words (Fig. 8c). Accordingly, bit 15 of the SID is used to determine how many bytes to skip before looking for the next SID.

At 310, the last SID of any single transmission is detected, by checking each SID to see whether it is all "ones". This word is inserted by the MBC after CRC checking, in order to provide the processor with a means of determining that the last SID has been located.

As noted, if the M-bit is not set (300) the democratic mode is being processed as at 311. Again the SID is looked up in the DRA at 312 to determine whether the data word is of interest to the local processor. Next, the two highest order bits of the SID are examined at 313 to determine what sort of democratic message has been received. If bit 15 is a 1, this indicates a one shot message as at 314 and the data in the AA field (Fig. 8) of the one shot is stored at a location in MBS determined by table look-up in DDT at 315. The next entry is then processed at 316.

If bit 15 is instead 0, that means the democratic mode message is a message to an originator, 317, either a general message or a request/change message. At 318, the processor looks in DDT to determine whether it is the originator which is referred to in the message. If it is not, the message has no relevance and the next entry is processed at 319. If it is the originator, bit 14 is then looked at to determine whether the message is a request/change or a general message at 320. If bit 14 is set, the message is general and is placed in the input FIFO at 321-322. If bit 14 is not set, the message is for request/change or one-shot at 323. If the word count is 0 then the request is for a one-shot at 324, and a one-shot bit 0 in the flag DDT field is set at 325. As indicated by the parenthesized matter 326, upon detecting bit 0 in the flag field DDT the MBD prepares the message for transmission, as discussed in connection with Fig. 23.

On the other hand, if the word count is not equal to zero that means the message is a request/change as noted at 327. The displacement field is then used to locate the data to be changed and the AD field data indicates the new data, at 328. The next element is then processed at 329.

9.   Timekeeping - Specifics

It is important in a distributed data processing system that means be provided for a system clock, so that events which later prove to be of interest can be analyzed historically. That is to say, suppose a circuit breaker trips. It is desirable to reconstruct the events leading up to the tripping of the circuit breaker so as to determine what caused its tripping. Clearly it is therefore desirable that the data at each drop be synchronized so that an accurate correlation can be established between the various events. If a simple crystal oscillator clock is used, for example, in each drop, each will be differently affected by drift over time with temperature change and the like. According to an aspect of the present invention, therefore, at the end of each 100 millisecond time frame, the clocks of each drop in the entire system are synchronized. Each of the local drops copies a master clock signal and adjusts its internal clock to reflect that value. In this way, the system is repetitively synchronized.

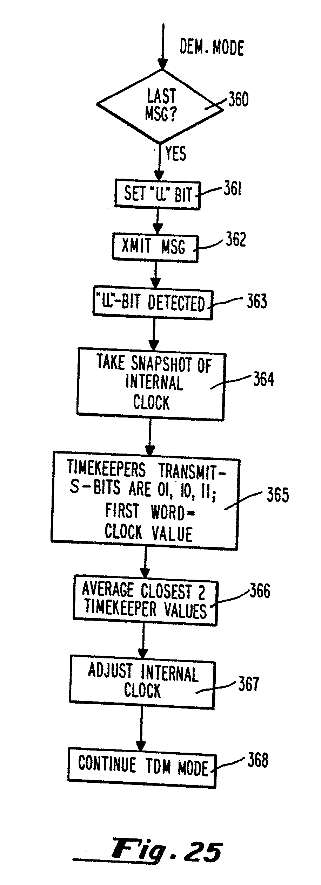

Figure 25 shows how this is done. Towards the conclusion of the democratic mode, the last message to be transmitted in that mode is detected. This is done by timing-out of the 100 millisecond internal timer which is carried by each drop. (The internal timers are sufficiently accurate that the worst case disagreement as to the exact time within any 100 ms period is 250 microseconds). When the last message is transmitted, the "U" bit in the control field is set, at 361, and the message is transmitted at 362.

When the drops detect the U bit at 363, they determine that the time division multiplex mode is being entered and they each take a "snapshot" of their internal clocks at 364. That is, each drop saves the present value of the internal clock in a register for that purpose. The timekeepers are the first three drops to transmit in the TDM mode, and they transmit their own clock values, that is, the result of their snapshots, at 365. This value is inserted after the control field of the message frame transmitted by each timekeeper. The timekeeper drops indicate that they are transmitting snapshots, in addition to the "ordinary" data transmitted by them in performance of whatever local processing function they are assigned to, by setting the S-bits appearing in the control word to 01, 10 and 11, with respect to timekeepers A, B and C respectively. All the drops including the timekeepers then average the closest two timekeepers' snapshot values at 366, and adjust their internal clocks to correspond thereto at 367. At 368, the TDM mode is continued; that is, the next drop following the timekeepers transmits its data.

In a preferred embodiment, the internal clocks actually include one millisecond and 125 microsecond clocks, for improved accuracy.

10. Bus Allocation

It will be appreciated that it will not necessarily be the case that each drop will have the same amount of data which requires transmission every tenth of a second. It is also obvious that some data needs to be transmitted more frequently than others, for example, data concerning process variables which change rapidly and are used in feedback loops clearly needs to be transmitted very frequently. Other data which does not change often can be transmitted less frequently. According to the preferred embodiment of the present invention, certain data is transmitted at one second intervals and certain other data at tenth of a second intervals. Moreover, each of the drops can be provided with plural time slots in the TDM mode during which to transmit this data. Thus, typically, a given drop may appear in the bus allocation list, which determines the sequence in which the drops have access to the data highway, more than once per 100 ms, and transmit different data each time.

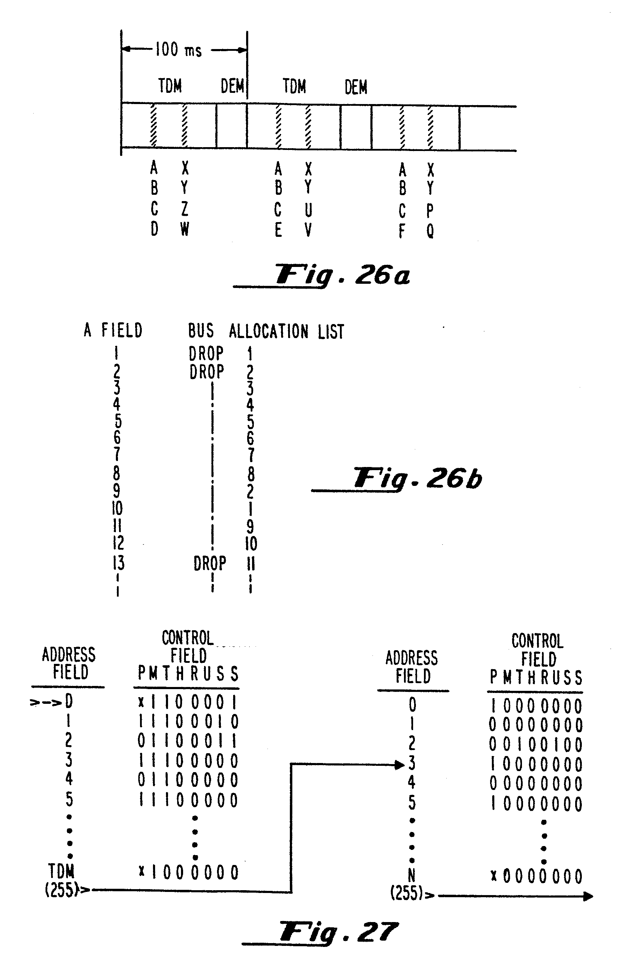

Figs. 26a and 26b show this schematically. Figure 26b illustrates one of the bus allocation lists, which are substantially similar in both democratic and TDM modes. In each case a simple pointer, the A field of each word, points to a slot in the bus allocation list, so that whatever drop is in that slot on the list is that which transmits next. As noted, several drops appear a plurality of times. These are therefore those which transmit differing data at different times in each 100 ms cycle.

Figure 26a gives an example of the data which may be transmitted by a single drop in success of operation. For example, in a first slot in a first 100 millisecond time frame, data items A, B, C and D are transmitted. In a later slot in the TDM portion of the same 100 ms time frame, items X, Y, Z and W are transmitted. In the next 100 ms interval, items A, B, C are repeated in the first transmission and X, Y in the second, but item E replaces item D, these both being data items transmitted once per second; items U and V similarly replace Z and W. In the third slot, F replaces E and P and Q replace U and V. After 10 such transmissions, indicating passage of one second, the values transmitted in the first interval--here A, B, C, D followed by X, Y, Z, W--are repeated.

The bus allocation lists of Fig. 26b are therefore a very important piece of information. Both are stored by each drop, and are continually refreshed by the timekeepers. Each transmits one-eighth of the two bus allocation lists in one of their democratic mode messages each second. In this way, every eight seconds the bus allocation lists are fully refreshed in the stored memories of each of the drops. The drops "vote" on any disagreements in the bus allocation lists received; that is, two of the timekeepers will usually agree, and the third is ignored.

In the democratic mode, stepping through the bus allocation list continues repetitively as many times as fit within the remainder of the 100 millisecond cycle, while the time division multiplex mode is ended when the bus allocation list has been gone through completely.

11. The Control Field

Reference has been made in numerous locations above to the use of the control field of each message frame. It is now appropriate to go over this material in a single unified place.

Figure 27 gives example of how the bits of the control field vary during one 100 ms cycle; the time division multiplexing mode is shown in the left half of the figure and the democratic mode on the right. The control field begins at the beginning of the time division mode with the value "D" in the address field. This is a pointer to the position in the bus allocation list of the last transmitted democratic mode message. The control field then appears X1100001. The second or M bit is set because the TDM mode has been entered. The third or T bit indicates the mode of the message that will follow. Since the next group of messages are all TDM, this bit stays set. The S bits are 01; as this is the first TDM message, this is timekeeper A's turn to transmit its snapshot. In the next two messages the S bits go to 10 then to 11 as timekeepers B and C transmit.

The address field is incremented with each transmission, thus moving the pointer through the bus allocation list, until the value "TDM" is reached, this being the value of the pointer to the highest numbered drop in the bus allocation list. The T bit then is unset, because the next message is of the democratic mode. The value D then becomes the address field, so that the democratic messages can pick up where they left off, and the democratic mode is entered; as noted on the right half of the drawing, the M field then goes to 0 because the message mode is no longer TDM. Again the transmission continues, stepping through the bus allocation list by incrementing the address field. As noted, the T and U-bits are set in the control byte of the last democratic frame, which has address field 2 in the example.

The other bits in the control field may be described briefly as follows: P is a parity bit indicative of the parity of the combined A and C fields. Its value is shown as X where the address and control fields are not defined, i.e., where "D", "TDM" or "N" appear. The H bit is set by the data highway controller to signify that this particular message is a recovery hand-off as a result of the previous hand-off being unanswered. That is to say, each data highway controller looks for a message following its own transmission of a message and if it does not detect one, it increments the address field and retransmits its message, indicating that this is being done by setting the H bit. This was discussed above in connection with the timekeepers which also restart the bus from a predetermined point in the bus allocation list, typically at entry into the TDM mode with transmission by the first timekeeper, when the highway remains inactive for an extended period. Setting of the R bit indicates that it is a timekeeper which has detected an abnormally long period of inactivity as just mentioned and is restarting the bus with this message.

12. Alarm Handling

As has been discussed above, according to the present invention, certain data is repetitively transmitted while other data is available upon request by way of one shot requests or the like. It should also be appreciated that sometimes it is desirable that data be brought to the attention of other drops. For example, consider a drop configured as a man/machine interface, typically a data terminal with a video display, which can be used to display various variables in connection with a schematic figure indicating where in the process being controlled they were measured. Ordinarily, once the operator has selected a particular portion of a process for monitoring local software will build a corresponding data recognition array, and the DHC will thereafter only select those points from the highway which are recognized by comparison of system ID's with values stored in the data recognition array. However, it is desirable that the operator still be provided with the indication, for example, that an alarm limit elsewhere in the process has been exceeded. Accordingly, each message also comprises a status field which indicates among other things whether an alarm limit has been exceeded. [Compare the problem here with the typical prior art system, in which the operator terminal is a peripheral of the central computer having direct access to a central memory--despite the numerous reasons why central computers are desirably avoided in distributed process control systems, they do allow ready access to a complete data base. According to the present invention such access is provided by the mixed-mode communications format.] These status messages are examined by each drop, whether or not their SID's are found in the DRA, and appropriate action is taken so that the operator is always alerted to alarm conditions.

Fig. 28 shows the alarm processing steps. At 370 the system ID SID is retrieved from a message on the data highway. At 372 the SID is compared with the data recognition array. If it is found there, the status word of the message is compared with the previous status word at 374 by ANDing it with a stored status mask, simply the status word previously received with respect to that data point. If there are any changes determined at 378, the status ID is put into a new status change FIFO in MBD for access by the functional processor at 380. If not, the next status ID is simply accessed at 381, after performance of conventional message processing as above. On the other hand, if the status ID was not in the DRA and if bit 7 of the status word is set, meaning a point is in alarm, at 382, the status ID is copied at 384 into an alarm FIFO, which is regularly checked by the functional processor. Otherwise the next SID is simply accessed. If a point is found to be in alarm, the functional processor will usually take the following steps.  It will access the alarm FIFO and send a one shot request at 386 onto the highway for accessing by the originator, which will transmit all additional information about the point in alarm at 388, and the drop will be supplied with all attributes about the point at 390.  These can then be flashed on the operator terminal's monitor screen to indicate what point is in alarm; such things as the English language identifier of the point can be shown in addition to the actual value and the limit against which it is to be compared.  Note that all the drops are thus supplied with all the information about the point in error in a single step, regardless of how many of them send one-shot messages; this provides an instructive comparison to systems in which each individual message must be separately acknowledged and responded to.

13.   Organization of Shared Memory

Fig. 29 shows the structure of the shared memory system 391 according to the invention.  The purpose of the organization is to provide a way in which an incoming data record 392, for example, can be easily examined to determine whether it comprises a piece of data which is to be used by the functional processor.  Thereafter, the message can be broken down into its constituent parts for determination of its precise meaning.  For example, a system ID is provided as part of each message 392.  It is used to access the data recognition array (DRA) 394; if a non-zero entry is found, this means that the associated functional processor is interested in that piece of data.  Thereafter, the value located in DRA 394, termed the "local ID", is used to index a data definition table (DDT) 396 which contains flags and data field size information.  A pointer is also stored in the data definition table 396 which points to the location in shared memory at which the data records 398 themselves are stored.  The records 398 comprise such attributes as the status ID of each point, as well as its value, any limits, its English language description and any other relevant attributes of the point. As noted, the system ID's of points in alarm can be separately stored in an alarm buffer 399.

Conclusion

There has been described above a distributed process control system in which a number of innovative techniques are used. These include the use of a mixed mode data transmission system in which a portion of each cycle is used for time division multiplexed operation, in which each data acquisition or control drop has an opportunity to transmit certain repetitive data over the connecting line, and during the remainder of each cycle, in a "democratic" mode of operation, additional commands, requests for data, and the like may be accommodated. There has also been described a system in which each of the individual data acquisition stations comprises a first processor for selecting that data which is of interest to the local processor and for supplying the data to the highway when its turn comes, coupled with a second functional processor or more for actually doing whatever process control input/output or the like is required at that location. These two interface by way of a dual port shared memory which, as described above, has substantial advantages. By distributing the processing intelligence in this way, an entirely transparent data base is provided for the entire system and the requirement found in prior art systems of a central or host computer is eliminated. This has numerous advantages in terms of reliability, modularity, simplicity of understanding and of use, but perhaps most importantly allows the system to operate even if some portion of the distributed intelligences is inoperative.

The system is synchronized by three timekeepers which are configured as data acquisition locations so that no additional timing lines or other signal wires need be added to the single, simple and easily made redundant coaxial cable which forms the serpentine connection of various data acquisition points. Also there has been described the way in which biphase coding is used for transmission of data in the system according to the invention and in the way in which a phase-locked loop circuit is used to divide biphase code into subportions which are then weighted so as to ensure accuracy of reception of the information.

The data highway controller card, the data highway communications card, and the shared memory card therebetween having thus been described, together with details of the control of the flow of data, the main elements of the data highway controller have been described.

The transceiver which has been adverted to briefly is described in copending application Serial No. _____ filed _____ (Attorney's Docket No. WE-8) which is incorporated herein by reference.

69

CLAIMS:

1. A distributed process control system having a plurality of processors (64) at varying points (76) in the system, and a data highway (70) interconnecting said processors (64) characterized in that each said processor has circuitry for obtaining data from respective system points and for transmitting said data as messages on said highway, each of said processors having circuitry (72) to receive said messages and to analyze status words and to detect when a given condition exists.

2. A system according to claim 1 characterized in that each processor has detecting circuitry responsive to detection that an alarm condition exists and circuitry for transmitting a request for additional information concerning the point with respect to which the alarm condition exists.

3. A system according to claim 1 or 2 characterized in that the processors comprise first circuitry for examining and determining identifier portions of messages received; second circuitry for examining said status portions of said messages to determine whether an alarm condition exists elsewhere in the system; and request circuitry for requesting additional information concerning any such alarm condition.

4. A system according to claim 3 characterized by storing circuitry for storing identifiers corresponding to data points of interest and a comparator for comparing said identifier portion of each message with stored identifiers and circuitry for examining a predetermined bit of each status portion of said message to determine an alarm condition.

5. A system according to claim 3 or 4 characterized in that said processor includes a functional processor coupled through a register to a data highway processor, said data highway processor containing said first and second examining circuitry.

6. A system according to claim 1 having a highway connecting said processors, each processor having circuitry for obtaining and storing data, the total data base of said system being too large for storage in any one processor, each processor also having a transmitter for transmitting data messages over said highway and receiving circuitry for receiving said data messages from other processors, said transmitter having circuitry for including a data identifier portion in each said data message passed over said highway, said receiving circuitry having a comparator for comparing said identifier portions with stored identifiers and selecting less than all said transmitted messages, said transmitter additionally comprising including circuitry for including a status portion with each said data message, said receiving circuitry additionally having a decoder for decoding said status portions and for selecting additional messages, whether or not the associated identifier portions match any stored identifier.

7. A system according to claim 1 characterized in that said processors each also having examining circuitry for examining all of status portions of signals to determine whether the associated messages are of interest to said processor, regardless of whether their identifiers are stored therein.

8. A system according to claim 1 characterized by communicating circuitry for communicating messages including alarm indications over said data highway without interruption of periodic data message transmissions.

0132069

9. A system according to claim 1 characterized by a plural path data highway in which each said processor has circuitry for outputting messages onto said highway at intervals and selecting circuitry for selecting messages of other processors as required, each processor being associated with plural detecting circuitry for detecting messages on respective paths of said highway and for generating a signal that a message has been properly received when this has been done, and comprising a receiver for receiving a particular detected message from the detecting means outputting the first said signal.

10. A system according to claim 1 characterized in that a system having a processor has a receiver for detecting messages on a bus, for performing error checking steps on said messages and for outputting good message received signals to said processor upon satisfactory performance of said error checking steps, said receiver comprising at least two receivers connected respectively to different ones of said bus paths, said processor having selecting circuitry for selecting the message received by the first of said receivers to output said good message received signal, whereby all of said receivers are constantly on line and are used interchangeably.

11. A system according to claim 10 characterized in that said processors are distributed processors in a distributed process control system and comprise operator terminals, process control points, and data acquisition points.

12. A system according to claim 11 comprising two paths providing redundant connection of said processors, each of said paths being physically differently positioned.

13. A system according to claim 1 characterized in that the processors are connected by plural cables, each of said processors comprising plural receivers each for receiving and decoding messages passed over a respective one of said cables, for performing error checking thereon and for providing a good message received signal to the associated processor when a message has been correctly decoded, said processor having selecting circuitry for selecting each said message from the receiver which first provides said signal.

Fig.1

Fig. 2

_**Fig. 3**_

_**Fig. 4**_

426    0132069

_Fig. 5_

_Fig.6_

(a)

100    102    104

| 81 | 82 | 83 | | | ----- | | | ----- | | | | ----- | |

TDM MODE          DEMOCRATIC MODE

← 100 ms →

BIPHASE ENCODED

106    108    110    112    114    116

(b)

...SPACE

| MARK 2.4 μs | APPROX. 8 ZERO'S | FLAG 01111110 | ADDRESS CONTROL & DATA | CRC 2 BYTES | 01111110 |

SPACE...

(c)

| FLAG | A | C | 0-63 DATA WORDS | 16-BIT CRC | FLAG |

110    116    118    120    114    110

_Fig.7_

| 7 | 6 | 5 | 4 | 3 | 2 | 1 | 0 |
|---|---|---|---|---|---|---|---|
| P | M | T | H | R | U | S | |

(a)

C FIELD BIT DEFINITION

(b)

| SYSTEM ID | STATUS |
|-----------|--------|
| 1 WORD | 1 WORD |

DIGITAL TDM MESSAGE

(c)

| SYSTEM ID | STATUS | ANALOG VALUE |
|-----------|--------|--------------|
| 1 WORD | 1 WORD | 2 WORDS |

ANALOG TDM MESSAGE

(d)

| SYSTEM ID | WC | AA |
|-----------|-----|-----|
| 1 WORD | 1 WORD | 1 TO 61 WORDS |

ONE-SHOT BROADCAST

| SYSTEM ID | WC | DISP | AD |
|-----------|-----|------|-----|
| 1 WORD | 1 WORD | 1 WORD | 1 TO 60 WORDS |

REQUEST/CHANGE MESSAGE TO ORIGINATOR

| SYSTEM ID | FI | WC | OPTIONAL DATA |
|-----------|-----|-----|---------------|
| 1 WORD | 1 WORD | | 1 TO 61 WORDS |

GENERAL MESSAGE TO ORIGINATOR

*Fig.8*

_Fig. 9_

$\overline{4MHZ}$ ⎍⎍⎍⎍⎍⎍⎍⎍⎍⎍⎍⎍⎍⎍⎍⎍⎍⎍⎍

2MHZ ⎍⎍⎍⎍⎍⎍⎍⎍⎍⎍

NRZ DATA

BIPHASE DATA

"0"    "1"

$BO_0$    $BO_1$

MARK

MESSAGE PROTOCOL

SPACE

_Fig. 10_

MARK (HIGH) ────▷○─── 126

NRZ DATA ──┐
           ⟩─ 124
2 MHZ ─────┘

$\overline{4 MHZ}$

SPACE (LOW) ────▷○─── 128

D    O ──── XMIT BIPHASE DATA

122

_Fig. 11_

Fig.12

0132069

11/26

(a) DATA

(b) DISTORTED, NOISY DATA

(c) WEIGHTING VALUES

0 1 2 3 3 2 1 0 0 1 2 3 3 2 1 0

(d) BIT STREAM

1 1 1 0 1 1 0 0 0 1 0 0 1 1 0 0

(e) WEIGHTED DATA

TOTAL   0 1 2 0 3 2 0 0 0 1 0 0 3 2 0 0

8          6

*Fig. 13*

Fig. 14

Fig. 15

13/26

013 2069

14/26

0132069

*Fig.16*

ADDRESS MUX 172

CP

$\overline{RLD}$ (HI)

REGISTER/ COUNTER

STACK POINTER

$\overline{FULL}$

162

ZERO DETECTOR

S WORD x 12 BIT STACK

OUT          IN

D   R   F   $\mu$PC

MULTIPLEXER

MICROPROGRAM COUNTER-REGISTER $\mu$PC

R=0

DECREMENT/HOLD/ LOAD

TEST XOR T/F $\overline{CC}$
UNCOND/COND
$\overline{CCEN}$

SELECT/CLEAR

INSTRUCTION PLA

INCREMENTER

CI (HI)

BITS 45–42

PUSH/POP/ HOLD/CLEAR

$\overline{OE}$

$\overline{PL}$   $\overline{VECT}$

$\overline{MAP}$

TO $\mu$PROGRAM ROM 160

12- BIT DATA PATH

CONTROL PATH

_Fig. 17_

Fig. 18

*Fig.19*

*Fig. 20*

_Fig. 21_

TDM MODE

BASED ON 0.1 SEC. LOADING PARAMETERS, TRANSFER PTS. FROM DDT TO COMMUNICATIONS BUFFER _343_

BASED ON 1 SEC. LOADING PARAMETERS, TRANSFER PTS. FROM DDT TO COMMUNICATIONS BUFFER _344_

_Fig.22_

_Fig. 23_

_Fig. 24_

DEM. MODE

LAST MSG? — 360

YES

SET "LL" BIT — 361

XMIT MSG — 362

"LL"-BIT DETECTED — 363

TAKE SNAPSHOT OF INTERNAL CLOCK — 364

TIMEKEEPERS TRANSMIT— S-BITS ARE 01, 10, 11; FIRST WORD= CLOCK VALUE — 365

AVERAGE CLOSEST 2 TIMEKEEPER VALUES — 366

ADJUST INTERNAL CLOCK — 367

CONTINUE TDM MODE — 368

_Fig. 25_

|←——— 100 ms ———→|

| TDM | DEM | TDM | DEM |

A X        A X        A X
B Y        B Y        B Y
C Z        C U        C P
D W        E V        F Q

_Fig. 26a_

A FIELD        BUS   ALLOCATION LIST
1              DROP   1
2              DROP   2
3                     3
4                     4
5                     5
6                     6
7                     7
8                     8
9                     2
10                    1
11                    9
12                    10
13             DROP   11
¦                     ¦
¦                     ¦

_Fig. 26b_

| ADDRESS FIELD | CONTROL FIELD P M T H R U S S | ADDRESS FIELD | CONTROL FIELD P M T H R U S S |
|---|---|---|---|
| >-->D | x I I 0 0 0 0 I | 0 | I 0 0 0 0 0 0 0 |
| I | I I I 0 0 0 I 0 | I | 0 0 0 0 0 0 0 0 |
| 2 | 0 I I 0 0 0 I I | 2 | 0 0 I 0 0 I 0 0 |
| 3 | I I I 0 0 0 0 0 | 3 | I 0 0 0 0 0 0 0 |
| 4 | 0 I I 0 0 0 0 0 | 4 | 0 0 0 0 0 0 0 0 |
| 5 | I I I 0 0 0 0 0 | 5 | I 0 0 0 0 0 0 0 |
| · | · | · | · |
| · | · | · | · |
| TDM (255)> | x I 0 0 0 0 0 0 | N (255)> | x 0 0 0 0 0 0 0 |

_Fig. 27_

_**Fig.28**_

Fig. 29